# EUROPEAN PATENT SPECIFICATION

(11) **EP 1 634 165 B1**
(45) Date of publication and mention of the grant of the patent: **10.09.2008**
(21) Application number: 04735914.6
(22) Date of filing: 03.06.2004
(51) Int. Cl.: G06F 9/44

(54) **INTERPRETER AND METHOD FOR INTERPRETING USER INPUTS**
ÜBERSETZUNGSEINRICHTUNG UND VERFAHREN ZUM ÜBERSETZEN VON BENUTZEREINGABEN
INTERPRETEUR D'ENTREE UTILISATEUR ET PROCEDE D'INTERPRETATION D'ENTREE UTILISATEUR

(30) Priority: 03.06.2003 GB 0312729
(43) Date of publication of application: 15.03.2006
(73) Proprietor: CANON KABUSHIKI KAISHA, Tokyo (JP)
(72) Inventor: STETINA, Jiri, c/o Canon Europe Ltd, Uxbridge, UB11 1JA (GB); SHAO, Yuan, c/o Canon Europe Ltd, Uxbridge UB11 1JA (GB)
(74) Representative: Hitching, Peter Matthew
(86) International application number: PCT/GB2004/002369
(87) International publication number: WO 2004/107229

(56) References cited:
- EP-A- 0 594 129
- EP-A- 1 100 013
- DUBINKO M,KLOTZ L,MERRIK R,RAMAN T: "XFORMS 1.0 WC3 Candidate Recommendation"[Online] 12 November 2002 (2002-11-12), XP002305288 Retrieved from the Internet: URL:www.w3.org/TR/2002/CR-xforms-20021112/ index-all.html> [retrieved on 2004-11-09] cited in the application
- JOHNSTON M ET AL: "Unification-based Multimodal Integration" ANNUAL MEETING OF THE ASSOCIATION FOR COMPUTATIONAL LINGUISTICS. PROCEEDINGS OF THE CONFERENCE, ARLINGTON, VA, US, 1997, pages 1-8, XP002262199
- BODELL M, JOHNSTON M, KUMAR S, POTTER S, WATERS K: "W3C Multimodal Interaction Framework"[Online] 6 May 2003 (2003-05-06), XP002305381 Retrieved from the Internet: URL:www.w3.org/TR/mmi-framework> [retrieved on 2004-11-09]

## Description

This invention relates to a user input interpreter and a method of interpreting user input to enable the user to control operation of a data processor such as, for example, a word processor, an image processor, a command processor (for controlling operation of a computer controlled machine or tool) or other data processor that may be implemented by programming computer apparatus with a software application.

In order to control an operation of such a data processor, a user must provide user input in a form that can be understood or interpreted by the data processor. This requires that the user be familiar with the specific form of user input specified by the data processor. This can be frustrating to a user and can make a data processor difficult to use until the user has familiarized him or herself with the particular form of user input that will be accepted by the data processor. In addition, different data processors may require different forms of user input which means that a user must familiarize him or herself with different forms of user input for different data processors.

In order to provide a user with at least a degree of flexibility in the manner in which they can supply user input to a data processor, semantic interpreters have been developed that provide a semantic representation and use a set of semantic interpretation rules to interpret a user's input so that different forms of user input having the same semantic meaning are identified by the semantic interpreter as representing the same input command.

Generally, the semantic representation is provided by a data model that defines the required semantic data and provides semantic data entry locations or "data slots" to be filled by the semantic interpreter as a result of processing user input in accordance with the semantic interpretation rules. The semantic interpreter must, however, have access to and utilize the data processor because only the data processor has access to the data being processed by the data processor, for example in the case of a data processor having a graphical user interface (GUI), only the data processor has access to data defining the identification and location of individual objects displayed to the user by the graphical user interface.

EP0594129 discloses a method of accepting multimedia operation commands. While pointing to either of a display object or a display position on a display screen of a graphics display system through a pointing input device, a user commands the graphics display system to cause an event on a graphics display, through a voice input device. This is achieved by allowing the user to perform the pointing gesture so as to enter a string of coordinate points which surround one area for either of the display object and a desired display position; allowing the user to give a voice command together with the pointing gesture; recognizing the command content of the voice command by a speech recognition process in response to the voice command; recognizing a command content of the pointing gesture; and executing the event on the graphics display in accordance with the command contents of the voice command and the pointing gesture. The method provides a man-machine interface which utilizes the plurality of media of the voice and the pointing gesture, and which offers a high operability to the user, and with which an illustration etc. can be easily edited.

In one aspect, the present invention provides a user input interpreter in accordance with claim 1.

In another aspect of the present invention, there is provided a data model provider in accordance with claim 30.

In accordance with another aspect of the present invention, there is provided a method of interpreting user input in accordance with claim 41.

Embodiments of the present invention will now be described, by way of example, with reference to the accompanying drawings, in which:
FIGURE 1 shows a functional block diagram of data processing apparatus having a user input interpreter embodying the present invention;
FIGURE 2 shows a block diagram of computing apparatus that may be programmed to provide the data processing apparatus shown in Figure 1;
FIGURE 3 shows a diagram for explaining the structure of a data model provided by a data model provider of the user input interpreter;
FIGURE 4 shows a diagrammatic perspective view of a user using data processing apparatus embodying the present invention;
FIGURE 5 shows a flow chart for explaining operation of a semantic meaning determiner of the user interpreter shown in Figure 1;
FIGURE 6 shows a flow chart for explaining operation of an integrator shown in Figure 1; and
FIGURE 7 shows a flow chart for explaining operation of an interaction manager shown in Figure 1.

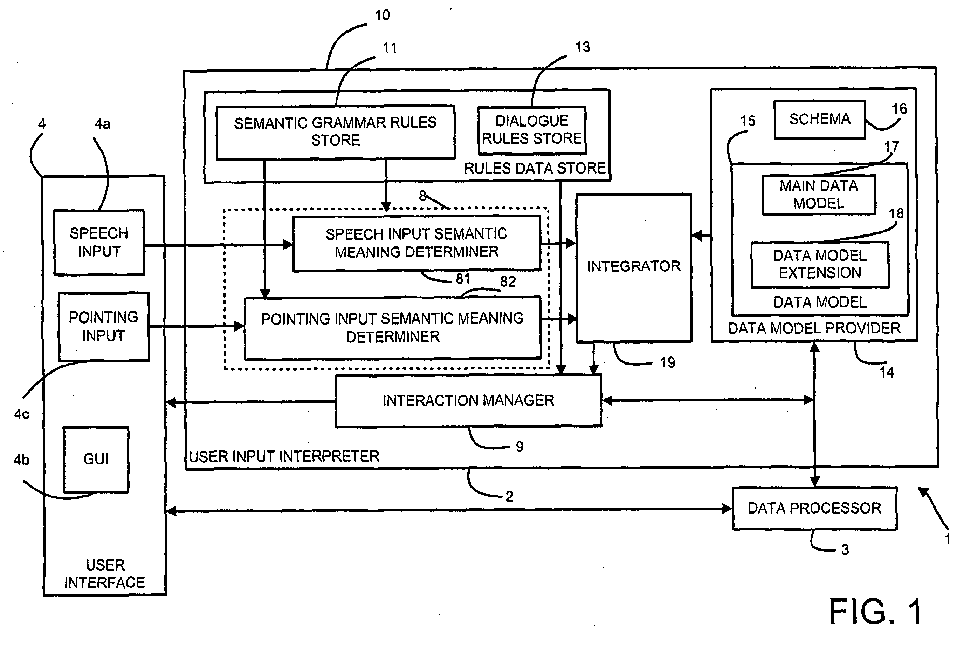

Referring now to the drawings, Figure 1 shows a functional block diagram of a data processing apparatus 1 having a user input interpreter 2 embodying the present invention.

The data processing apparatus 1 comprises a data processor 3 configured to control processing of data. The data processor may be for example, a word processor, an image processor, a user input data processor for controlling operation of a machine or tool in accordance with user input or any other form of data processor that can be implemented by programming computer apparatus.

The data processor 3 is coupled to a user interface 4 via which the data processor 3 provides a graphical use interface (GUI) 4b for displaying information to the user.

The user interface 4 is also coupled to the data processor 3 via a user input interpreter 2. The user input interpreter 2 is configured to interpret user input so that different forms of user input having the same semantic meaning are interpreted by the user input interpreter 2 to represent the same user input command.

In this example, the user interface 4 has a speech user input 4a for enabling a user to provide user input in the form of speech, for example using a microphone and speech recognition software, and a pointing input 4c for enabling a user to point at and select objects on the graphical user interface 4b using, for example, a mouse or other pointing device.

The user input interpreter 2 comprises a semantic meaning determiner section 8 that provides a respective semantic meaning determiner for each different type of the user input. Thus, in this example, the semantic meaning determiner section 8 has a speech input semantic meaning determiner 81 and a pointing input semantic meaning determiner 82.

The semantic meaning determiners 81 and 82 are coupled to a rules data store 10 having a semantic grammar rules store 12 that stores semantic grammar rules. The semantic meaning determiners 81 and 82 are configured to parse user input using the semantic grammar rules to identify the semantic meaning of received user input data and to associate received user input data with semantic identifiers ("semantic tags") identifying the determined semantic meaning to provide semantically identified ("semantically tagged") data.

The semantic meaning determiners 81 and 82 are coupled to provide the semantically identified or tagged data 2 to an integrator 19 which is arranged to integrate the semantically identified data from the semantic meaning determiners (in the process effecting disambiguation, if necessary as will be described below) and to supply the integrated semantically identified data to an interaction manager 9.

The interaction manager 9 is also coupled to a dialog rules store 13 of the rules data store 10. The dialog rules store 13 stores dialog rules for enabling the interaction manager 9 to conduct a dialog with the user via the user interface 4.

The user input interpreter 2 also has a data model provider 14 that stores a data model 15 comprising a main data model 17 that defines a semantic representation for a corresponding user input command and provides data entry locations or slots to be populated by the interaction manager 9. Each data entry location or slot is associated with a specific different semantic tag or identifier that defines the type of semantic data with which that data entry location can be populated.

In addition to the main data model 17, the data model 15 includes a data model extension 18 that provides access data for accessing or calling a procedure or method of the data processor 3 necessary to identify an object or location on the graphical user interface 4b.

The data model provider 14 also stores a schema 16 that defines the overall rules of and constraints on the data model.

The interaction manager 9 communicates with the data processor 3 and the data model provider 14 to enable the data slots or data entry locations of the data model to be populated by the data provided by the integrator 9 .

The inclusion of the data model extension 18 enables the data model to be populated under the control of the interaction manager 9 without the interaction manager 9 having to access the data processor 3 until the data model has been fully populated, that is until all of the data entry locations in the data model required to be filled have been filled.

Once all of the data entry locations of the data model has been populated with data of the required semantic type, the interaction manager 9 causes procedures or methods of the data processor 3 defined by the access data in the data model extension 18 to be accessed or called to enable the interaction manager 9 to instantiate the data model. The user input interpreter 2 thus has access to the context of the entire data model when accessing the data processor 3.

As described above, access to the data processor 3 is defined by the data model extension data. The access data required for a data model for a particular semantic representation and for a particular data processor need not be provided as part of the user input interpreter but may be provided by, for example, the designer of the user interface for that particular data processor. Thus, a generic user input interpreter can be provided that can be tailored to the requirements of a specific data processor by the designer of the user interface for that data processor.

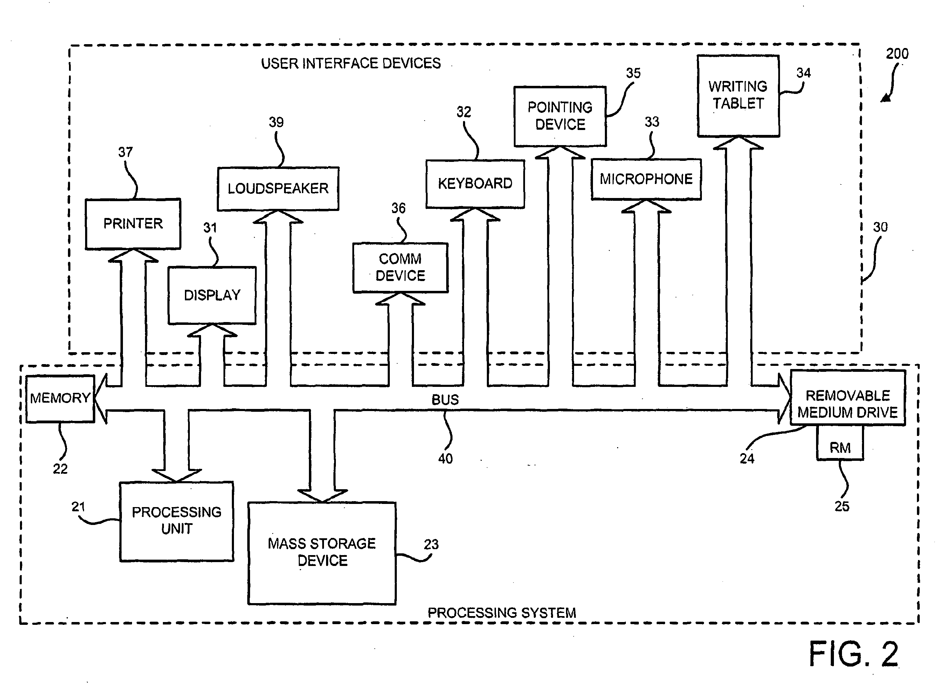

Figure 2 shows a block diagram of computing apparatus 200 that may be programmed by processor-implementable instructions to provide the data processing apparatus 1 shown in Figure 1.

The computing apparatus 200 comprises a processing system 20 having a processing unit 21 coupled by a bus 40 to a memory 22 in the form of ROM and/or RAM, a mass storage device 23 such as a hard disk drive and a removable medium drive 24 for receiving a removable medium such as, for example, a floppy disk, CD ROM, DVD or the like.

The bus 40 is also coupled to a number of user interface devices 30 that are configured to provide the user interface 4 shown in Figure 1. In this example, the user interface devices include a display 31, a keyboard 32, a microphone 33, a writing tablet 34, a pointing device 35, a printer 37 and a loudspeaker 39. The user interface devices also include a communications device 36 (COMM device) such as a MODEM and/or network card that enables the computing apparatus 200 to communicate with other computing apparatus either directly or over a network such as a local area network, wide area network, intranet or the Internet.

The computing apparatus 200 is programmed to provide the data processing apparatus shown in Figure 1 by processor implementable instructions and data provided by at least one of:
pre-installation in the memory 22 or on the mass storage device 23;
downloading from a removable medium 25 received by the removable medium drive 24;
input by a user using one or more of the user input devices such as the keyboard 32;
supplied as a signal from another computing apparatus via the communications device 36.

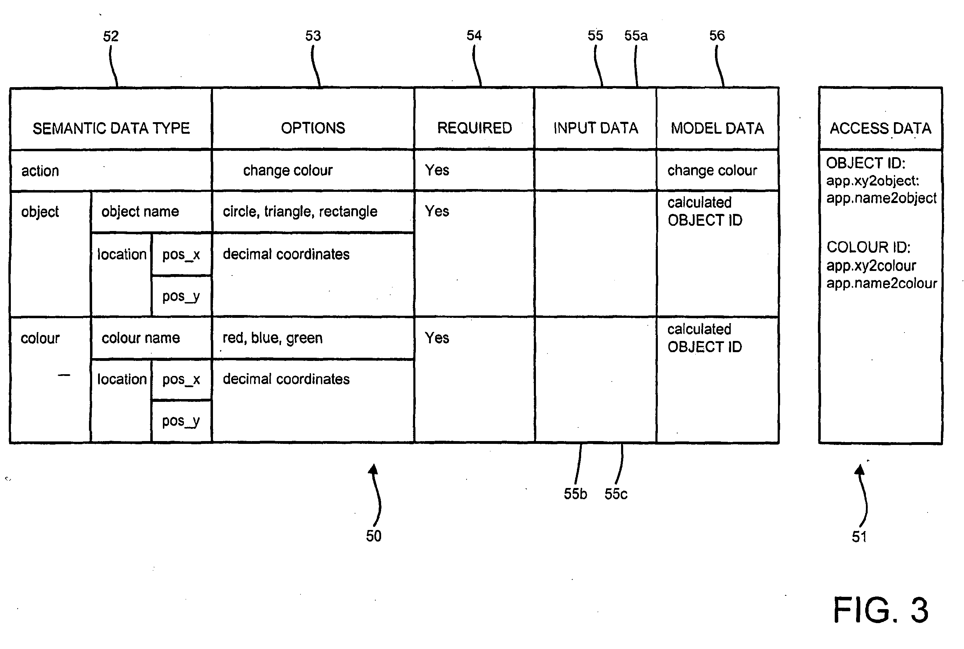

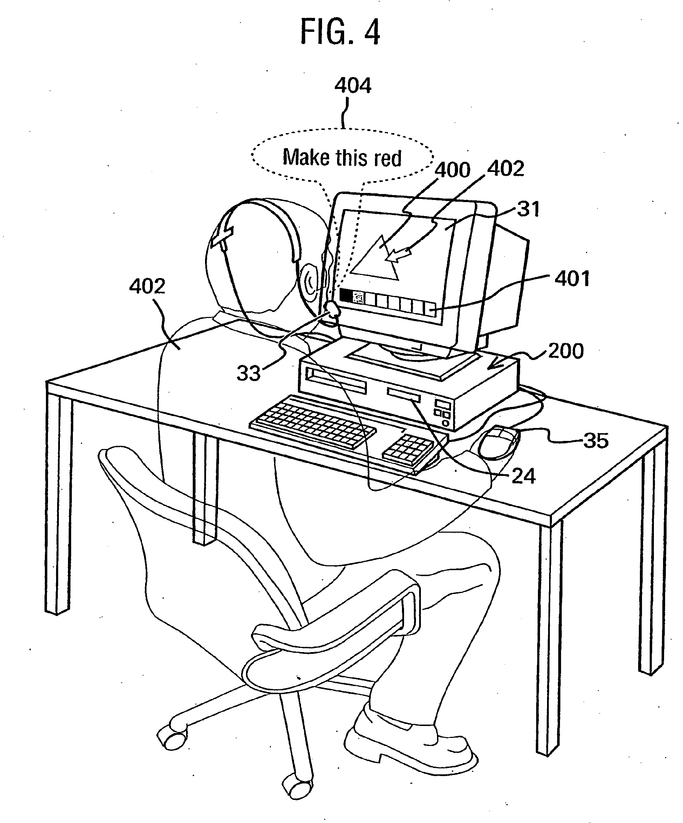

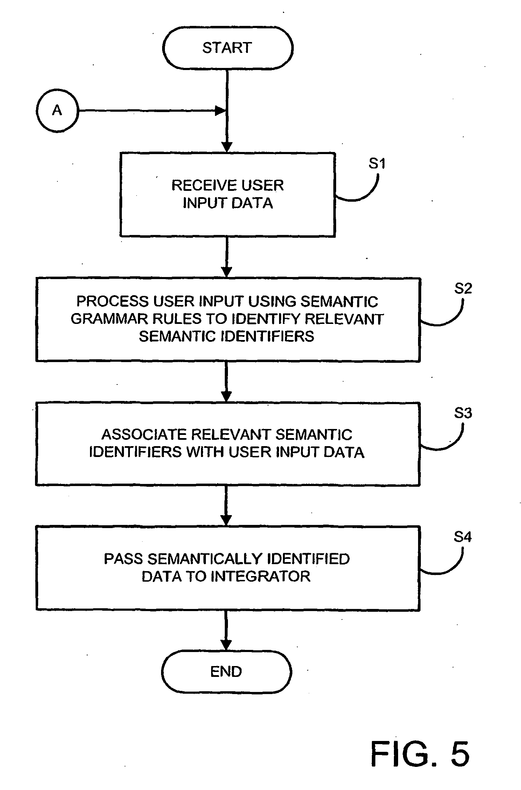

Operation of the user input interpreter 2 will now be described in greater detail with the help of Figures 3 to 7 in which Figure 3 shows a diagram for assisting in explaining the structure of a data model 15 stored by the data model provider 14, Figure 4 shows a perspective view of a user using data processing apparatus embodying the invention and Figures 5 to 7 show flow charts for illustrating operation of the user input interpreter 2.

Referring firstly to Figure 3, this shows a first table 50 representing the data structure and content of the main data model 17 and a second table 51 representing the structure and content of the data model extension 18.

The table 50 has columns 52 to 56 headed "semantic data type", "options", "required", "received user input data" and "model data", respectively. The column headed "semantic data type" represents the part of the main data model 17 that defines the types of semantic data relevant to the particular semantic representation while the column 53 headed "options" represents the part of the main data model 17 defining the available options for each semantic data type and the column 54 headed "required" represents the part of the main data model 17 that defines whether or not user input for a particular semantic data type is required to populate the data model fully. Column 55 represents the data entry locations or data slots of the data model 15, that is the part of the data model that is populated in accordance with user input, while column 56 represents the final model data that is the model data that is after the data model has been instantiated after methods or procedures of the data processor 3 have been called using the access data to return to the interaction manger 9 the actual object and colour on the graphical user interface 4b to which the user's input refers.

The constraints on the semantic data defined by the options column 53 and the required column 54 shown in Figure 3 are constraints imposed by the data model schema 16.

The second table 51 shown in Figure 3 stores the access data provided by the data model extension.

Figure 3 illustrates an example where the data model 15 relates to a user action to change the colour of an object displayed by the graphical user interface (GUI) 4b of the data processor 3. In this case, the semantic data types shown in column 50 include an "action" semantic data type", an "object" semantic data type" and a "colour" semantic data type", all of which are required, as specified in column 54, to populate the data model. In this example, the data entry location 55a can be omitted or pre-filled because there is only one available option for the semantic data type "action", namely a command from the user to change colour while the data entry location 55b requires data determined by one of the semantic meaning determiners as being of the semantic data type "object" and the data entry location 55c requires data determined by one of the semantic meaning determiners as being of semantic data type "colour".

In this example, the user has available speech and pointing inputs 4a and 4c and can specify an object displayed on the graphical user interface 4b by spoken input identifying the name of the object or by pointing input identifying the x,y co-ordinates of the object on the graphical user interface 4b. Similarly, the user can identify the desired colour for the object either by spoken input naming the colour or by pointing input identifying the location in a colour palette of the required colour. Accordingly, the data model provides two alternatives for the semantic data types "object" and "colour" namely "object name" and "object location" and "colour name" and "colour location" with the "data types", "object location" and "colour location" both requiring x and y coordinate position input data identified in Figure 3 as "pos_x" and "pos_y".

In this example, the data model schema 16 constrains the available object names to "circle", "triangle" and "rectangle" and constrains the available colour names to "red", "blue" and "green". The data model schema also constrains the location input to be in a form of decimal coordinates as shown in column 53.

As explained above, information identifying the objects displayed on the graphical user interface and the locations of those objects in the graphical user interface 4b of the data processor 3 is available only to the data processor 3 and not to the user input interpreter 2 and to enable the interaction manager 9 to access this information to complete the instantiation of the data model in accordance with the user's input, the access data 51 of the data model extension 18 includes calls to methods or procedures that have to be carried out by the data processor 3 to identify the object and the colour on the graphical user interface 4b. As shown in Figure 3, in this example, the data model extension 18 provides two alternative calls to identify the object and two alternative calls to identify the colour, namely:
app.xy2object
app.name2object
app.xy2colour
app.name2colour

The interaction manager 9 will use the call "app.xy2object" when the data model is populated with data identifying an object's x, y position and the call "app.name2object" when the data model is populated with data identifying an object by name. Similarly, the interaction manager 9 will use the call "app.xy2colour" when the data model is populated with data identifying an colour's x, y position and the call "app.name2colour" when the data model is populated with data identifying a colour by name.

In this particular example, the data model 15 is implemented using Xforms which is described in detail in the document entitled "Xforms-the next generation of web forms" available on line at http://www.w3.org/MarkUp/Forms/. XForms is a specification of web forms that can be used in a wide variety of platforms including desktop computer, hand held information appliances. In this case, the data model schema 16 is an XML schema, the main data model 17 is defined by an Xform and the data model extension 18 is defined by extending the Xforms model binding property definition which is described in the document entitled "Xforms 1.0" available for downloading from http://www.w3.org/TR/2002/CR-xforms-20021112/, in particular section 7.4 of that document, to allow application methods within the calculate property of the Xforms model item.

The Xforms main data model 17 for the data model example illustrated by Figure 3 has the following form:
<instance>
   <object/>
      <object_id/>
      <object_name/>
      <pos_x/>
      <pos_y/>
   </object>
   <colour>
      <colour_id/>
      <colour_name/>
      <pos_x/>
      <pos_y/>
   </colour>
</instance>
where the bracket structure < /> indicates a data entry location or data slot and contains data identifying the semantic tag or identifier required to be associated with data to populate that data entry location.

(No action is specified in this main data model because, as explained above with reference to Figure 3, this particular data model provides for only one possible action, namely the action "change colour".)

In this example, the access data provided by the data model extension 18 comprises:
<xforms:bind nodeset= "object_id"
   calculate="app.xy2object(/object/pos_x,/object/ pos_y)"> <xforms:bind nodeset= "object_id"
   calculate= "app.name2object(/object/object_name)"/> <xforms:bind nodeset= "colour_id"
   calculate= "app.xy2colour(/colour/pos_x, /colour/pos_y)" /> <xforms:bind nodeset= "colour_id
   calculate= "app.name2colour(/colour/name)" />
   In this example, the semantic grammar rules in the semantic grammar rules store 11 are written using the XML XPath language which is described in a document entitled "XML Path language (XPath) version 1.0" and can be downloaded from http:/www.w3.org/TR/xpath and include:
a first semantic grammar rule:
   public <task> = [ please ] make this
   ( blue { /colour/colour_name = "blue"; } |
   red { /colour/colour_name = "red"; } |
   green { /colour/colour_name = "green" } )
that associates spoken words representing the colour names "blue", "red" and "green" with the semantic tag "colour_name",
a second semantic grammar rule:
   public <task> = [ please ] make
   ( circle { /object/object_name = "circle"; } |
   triangle { /object/object_name = "triangle"; } |
   rectangle { /object/object_name = "rectangle"; } )
   ( blue { /colour/colour_name = "blue"; } |
   red { /colour/colour_name = "red"; } | I
   green { /colour/colour_name = "green" } )
that associates spoken words representing the object names "circle", "triangle" , and "rectangle" with the semantic tag "object_name",
a third semantic grammar rule:
   public <task> = pointing { /object/pos_x = x & /object/pos_y = y }
that associates the semantic tags pos_x and pos_y for an object with x and y coordinates from the pointing input 4c, and
a fourth semantic grammar rule:
   public <task> = pointing { /colour/pos_x = x & /colour/pos_y = y }
that associates the semantic tags pos_x and pos_y for a colour in a colour palette with x and y coordinates from the pointing input 4c.

Figure 4 shows a diagrammatic representation of a user 402 using the data processing apparatus 1 where the user has decided to use the pointing device or mouse 35 to position a cursor 402 of the graphical user interface on a displayed triangle 400 and to say the words "make this red" as shown by the speech bubble 404 in Figure 4 into the microphone 33. The user could, however, as other possibilities have used the pointing device 35 to point to a specific colour on a colour pallet 401 and said, for example "make the triangle this colour" or "colour the triangle with this colour".

Operation of the user input interpreter 2 to interpret these user inputs will now be described with the aid of the flow charts shown in Figures 5 to 7.

Figure 5 shows the steps carried out by each of the semantic meaning determiners 81 and 82.

Thus, when the user speaks the words "make this red", the speech input semantic meaning determiner 81 receives speech input data from the automatic speech recogniser of the speech input 4a at S1 in Figure 5. The speech input semantic meaning determiner 81 parses the received speech data in accordance with the semantic grammar rules stored in the semantic grammar rules store 11 to identify relevant semantic identifiers or tags at S2 in Figure 5.

In this example, the speech input semantic meaning determiner 81 identifies the user input data representing the spoken word " red" as corresponding to the semantic grammar rule:
public <ask> = [ please ] make this
   ( blue { /colour/colour_name = "blue"; } |
   red { /colour/colour name = "red"; } |
   green { /colour/colour_name = "green" } )

The speech input semantic meaning determiner 81 therefore associates the spoken user input "red" with the semantic. tag "colour_name" at S3 in Figure 5 to provide semantically identified or tagged data. The speech input semantic meaning determiner 81 then passes the semantically identified data to the integrator 19 at S4.

Similarly, when the user uses the pointing device to point at a location on the graphical user interface 4b, the pointing input semantic meaning determiner 82 receives from the pointing input 4c x, y coordinate position input data representing the x and y location on the graphical user interface 4b at which the pointing device is pointing at S1 and then, at S2, determines which of the semantic grammar rules stored in the semantic grammar rules store 11 relate to x, y coordinate position input data to identify relevant semantic identifiers or tags at S2 in Figure 5.

In this example, the pointing input semantic meaning determiner 81 identifies the user input data representing the x and y coordinate positions of the pointing device as corresponding to either the semantic grammar rule:
public <ask> = pointing { /colour/pos_x = x & /colour/pos_y = y }
or the semantic grammar rule:
public <ask> = pointing { /object/pos_x = x & /object/pos_y = y }

Thus, in this case, at S3 the pointing input semantic meaning determiner 82 associates the x coordinate position input data with the semantic identifier colour/pos_x and with the semantic identifier object/pos_x and associates the y coordinate position input data with the semantic identifier colour/pos_y and with the semantic identifier object/pos_y.

Then, at S4, the pointing input semantic meaning determiner 82 passes these two sets of semantically identified or tagged data to the integrator 19.

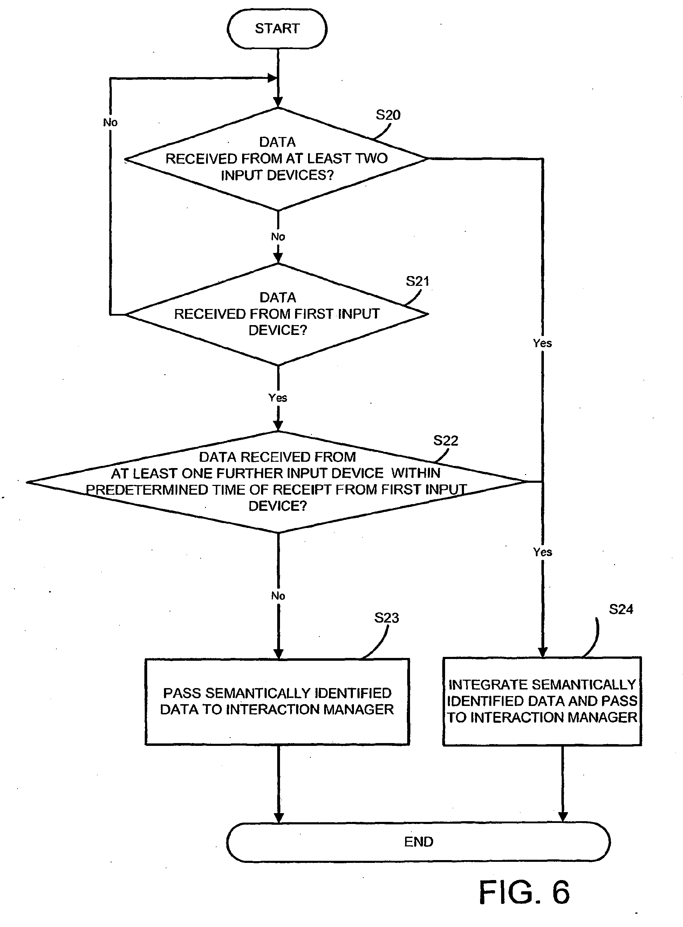

Figure 6 shows a flow chart illustrating steps carried out by the integrator 19.

At S20, the integrator 19 checks whether at least two semantic meaning determiners have simultaneously received user input data. If the answer is no, then at S21 the integrator 19 checks to see if a first one of the semantic meaning determiners has received user input data and, if the answer is yes, waits to see if another one of the semantic meaning determiners receives user input within a predetermined time of the receipt of user input by the first semantic meaning determiner. If, at S22, a second semantic meaning determiner does not receive user input within a predetermined time of the receipt of user input by the first semantic meaning determiner data, then at S23, the integrator passes the semantically identified or tagged data received from the first semantic meaning determiner to the interaction manager 9 without further processing.

If, however, the integrator 19 determines at S20 that at least two semantic meaning determiners have simultaneously received user input data or at S22 that at least two semantic meaning determiners have received user input data within a predetermined time of one another, then at S24 the integrator integrates the semantically identified or tagged data from the semantic meaning determiners 81 and 82 and passes the integrated semantically tagged data to the interaction manager 9.

In the example described above with reference to Figure 4, the speech input semantic meaning determiner 81 and the pointing input semantic meaning determiner 82 receive user input at the same time because the user uses the pointing device to point to the triangle while saying the words "make this red". Thus, in this example, the answer at S20 is yes. Accordingly, the integrator 19 integrates the semantically tagged data at S24. In this example, the semantically tagged data from the pointing input semantic meaning determiner 82 represents two possible options, namely either a colour or an object position. Therefore, before integrating the semantically tagged data, the integrator 19 has to disambiguate the two options to select the correct one.

In order to identify the correct one of the two options, the integrator 19 requests the interaction manager 9 to determine from the data model 15 the types of semantic data required by the data model. In this example, the interaction manager 9 will advise the integrator 19 that there are only two required semantic data types, object and colour.

The integrator 19 also assumes that the pointing input semantic meaning determiner 82 provides data of a different semantic type from the speech input semantic meaning determiner 81 (because a user would not normally specify an object both by spoken input and pointing input, for example, a user would not normally both say "triangle" and point to the triangle in Figure 4). Therefore in the example being described, the integrator 19 assumes, because the speech input semantic meaning determiner 81 has tagged the word "red" with the semantic tag representing the semantic data type "colour", namely "colour_name", that the correct semantically tagged data from the pointing input semantic meaning determiner 82 is the data tagged with semantic tags representing the semantic data type "object" (namely the semantically tagged data tagged with the semantic identifiers or tags object/pos_x object/pos_y) and not the tagged with semantic tags representing the semantic data type "colour" (that is the semantically tagged data tagged with the semantic identifiers or tags colour/pos_x colour/pos_y).

Accordingly, the integrator 19 determines that the data tagged with the semantic identifiers or tags object/pos_x object/pos_y provided by the pointing input semantic meaning determiner 82 should be integrated with the semantically tagged data from the speech input semantic meaning determiner 82 tagged with the semantic tag " colour_name" .

In the present case, the information provided by the interaction manager 9 that there were only two semantic data types required by the data model 15 and the assumption by the integrator 19 that the different semantic meaning determiners provide data tagged with different semantic tag types was sufficient to enable the integrator 19 to identify the correct set of semantically tagged data from the pointing input semantic meaning determiner 82. If, however, this information and assumption are not sufficient to enable the integrator 19 to identify the correct option, then the integrator 19 will, at S24 in Figure 6, ask the interaction manager 9 to conduct a dialog with the user using dialog rules stored in the dialog rules store 13 to identify the correct option. For example, the interaction manager may cause the graphical user interface 4a to display a prompt to the user such as: "what are you pointing at? " or, if the interaction manager or user interface includes text-to-speech processing ability, cause the loudspeaker 39 (Figure 2) to issue the same message. It should be noted that, instead of conducting a dialog with the user, the correct option could be identified in other ways. For example, the correct option in many circumstances could be automatically identified (that is, without user input) using predetermined heuristics. Of course, a combination of automatic identification and user dialog could be used.

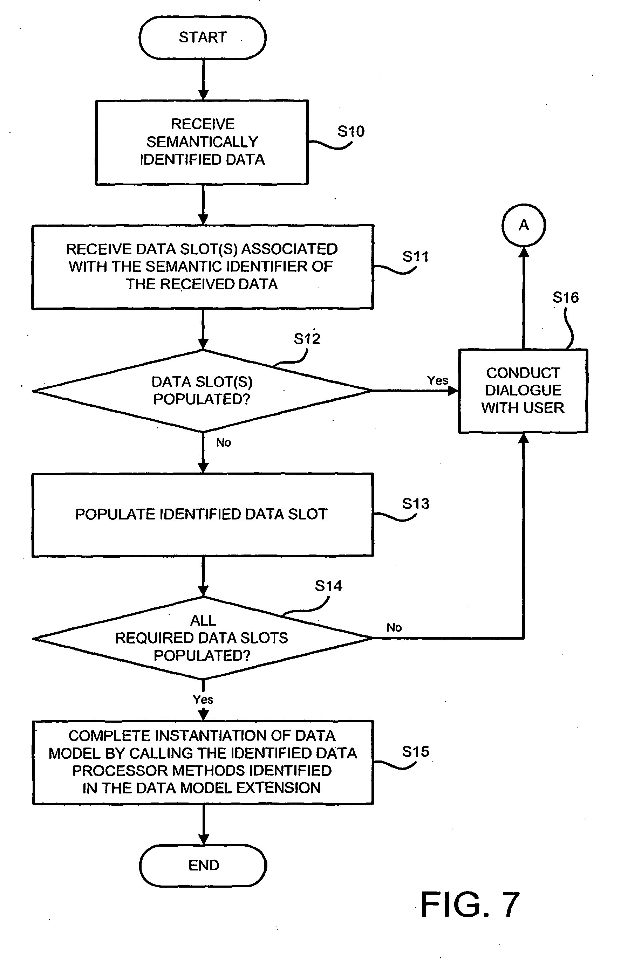

Figure 7 shows steps carried out by the interaction manager 9.

Thus, when at S10 the interaction manager 9 receives semantically tagged data (whether integrated or not) from the integrator 19, then at S11 the interaction manager 9 identifies the data slot(s) of the main data model 17 associated with the semantic tag(s) of the semantically tagged data and at S12 checks to see if those data slot(s) is (are) already populated. If the answer is yes, then at S16 the interaction manager 9 will conduct a dialog with the user using the dialog rules in the dialog rules store 13 to prompt the user to provide further input. For example, in the example given above, if the user says "make this red" so that the colour _name data slot is then populated and then says " blue", the interaction manager 9 may, having determined that the colour_name data slot is already populated, then issue a prompt saying "do you want the object to be red or blue?"

If, however, the answer at S12 is no, then the interaction manager 9 causes the data slot(s) to be populated at S13 and checks at S14 if all of the required data entry locations or data slots the main data model 15 have been populated. If the answer is no, the interaction manager 9 conducts a dialog with the user at S16 using the dialog rules in the dialog rules store 13 to prompt the user to provide further user input to populate the remaining data entry locations or data slots. Thus, if in example illustrated above with reference to Figure 4, the user simply says "make this red" but does not identify an object, then the interaction manager 9 will issue a prompt such as " what object do you want to make red?"

Once the answer at S14 is yes, then at S15, the interaction manager 9 determines from the partly instantiated data model and the data model extension 18 which of the data processor 3 methods correspond to populated data entry locations or data slots. Thus, in the example given above where the object <pos_x/> and <pos_y/> data slots and the <colour_name/> data slot have been filled (because the user pointed at the object and said " make this red" ), the interaction manager 9 determines that the relevant methods or procedures of the data model extension are:
calculate= "app.xy2object(/object/pos_x, /object/pos_y)" and
calculate="app.name2colour(/colour/name)" .

The interaction manager 9 then requests the data processor 3 to execute the determined methods or procedures so that the data processor 3 returns the corresponding object and colour identifiers that otherwise would have been known only to the data processor 3. The interaction manager 9 can then complete instantiation of the data model by incorporating the colour and object identifiers provided by the data processor 3 (that is filling the model data of column 56 in Figure 3).

In the example being described, the final instantiation of the data model may be:
<instance>
   <object/>
      <object_id>0016<object_id>/>
   </object>
   <colour>
   <cblour_id>115<colour_id/>
   </colour>
</instance>
where 0016 and 115 are the returned object and colour identifiers, respectively.

The interaction manager can then cause the data processor 3 to carry out the action required by the user in accordance with the fully instantiated data model instance, causing in the example given above, the triangle to be coloured red.

The example described above is relatively simple and specific to a user input that relates solely to the action of the changing of the colour of a displayed object. An example where the data model provides a user with a number of different action options will now be described with the aid of Appendices 1 to 5 in which Appendix 1 shows the XML schema 16, Appendix 2 shows an instance of the XML schema, Appendix 3 shows the main data model 17, Appendix 4 shows the data model extension and Appendix 5 shows instances of the data model

As mentioned above the XML schema defines the rules and constraints upon the data model. The form of the XML schema shown in Appendix 1 is generally the same as that used for the simple example described above. The instance of the XML schema shown in Appendix 2 specifies constraints for various elements of the data model. Thus, as shown, the instance of the XML schema specifies, amongst other things that:
each instance must have element references for one action and one object and may have a group reference "specification" defining a choice of operations that the user can instruct be performed;
the action of a data model instance can only be any one of: move, copy, delete, resize, change colour;
the object of a data model instance can only be any one of: restricted to circle, triangle and rectangle;
the group specification provides that a data model instance must have at least one of a location, colour and scale with the scale being constrained to decimal values a data model instance can have only one set of x, y coordinates;
a data model instance can have only one colour selected from red, green and blue.

The data model shown in Appendix 3 provides two instance options:
A first instance option src "0" providing data slots or entry locations for:
   an action (which is constrained by the instance of the XML schema to be one of move, copy, delete, resize or changecolour)
   an object location as pos_x and pos_y or object name (shape ID)
   a colour location as pos_x and pos_y or colour name (which is constrained by the instance of the XML schema shown in Appendix 2 to be red, green or blue)
   a scale
   and a second instance option src"1" providing data slots or entry locations for:
   an action
   an object name (shape ID)
   a scale

The bind references in the data model shown in Appendix 3 require that any instance of the data model always have one action and one object, require a colour location or colour name if the action is "changecolour", require a location if the action is move or copy and require a scale if the action is "resize".

The data model extension 18 shown in Appendix 4 provides calls to data processor methods similar to those for the simple example given above.

Thus, in this example, the user can input user commands to move, copy, delete, resize, or change the colour of a circle, triangle or rectangle with, where the user elects to change colour, the available colours being selected from red, green and blue and, as in the simple example, the user input interpreter will interpret user input commands having the same semantic meaning in the same manner so that the user can elect to use either the pointing device or spoken input to identify an object, location or colour, for example.

As in the simple example, once the data entry locations or data slots required to be filled by the data model have been filled by semantically tagged user input data provided by the semantic meaning determiners 81 and 82, then the interaction manager 9 requests the data processor 3 to implement the methods specified by the data model extension 18 shown in Appendix 4 to return the object and, if required, colour identifiers to enable the interaction manager 9 to complete instantiation of the data model for the particular user input.

Appendix 5 shows examples of various instances of the data model shown in Appendix 3 with instances 0, 1, 4 and 5 being data model instances that will cause an object at a specific location to be moved to another location, instances 2, 3 , 6 and 7 being data model instances that will cause a circle to be moved to another location, instances 8, 9 and 11 being data model instances that will cause an object at a specific location to be resized in accordance with a specified scale and instance 10 being a data model instance that will cause a circle to be resized in accordance with a specified scale

As described above, the pointing input semantic meaning interpreter 82 is arranged to interpret position data input from a pointing device. The pointing input semantic meaning determiner may, however, be a generic position input semantic meaning determiner arranged to determine the semantic meaning of any one or more forms of position input that select a location on the graphical user interface, for example a keyboard, graphics tablet or a touch sensitive display input alternatively or in addition to the pointing device input.

In the above embodiments, the speech input semantic meaning determiner 82 is arranged to determine the semantic meaning speech input. This semantic meaning determiner may, however, be a text semantic meaning determiner 82 arranged to determine the semantic meaning for any one or more different forms of text input, for example any one or more of speech, keyboard, handwriting input via the writing tablet, provided the user interface has an appropriate input to text data converter, that is a speech recognition engine in the case of speech input and a handwriting recognition engine in the case of handwriting input.

Also, if the computing apparatus shown in Figure 2 is provided with a camera and the user input has appropriate recognition software, the direction of the user's gaze may be used to provide position input and movement of the user's lips may be detected to obtain viseme data that can be converted to provide text input.

The present invention may be applied when any one or more of the above-described different inputs are available. For example, the present invention may be applied when only text data input (in one of the forms mentioned above such as the speech data or keystroke data) is available. Of course, when only one user input form is available, then the integrator 19 will not be required.

In the above-described examples, objects on a graphical user interface are identified by the user specifying a name describing the object or its colour or an x, y coordinate location. Other ways of specifying or identifying an object may be possible, for example the user may specify the object's relation to another object (for example a user may identify an object by specifying it as the biggest or smallest displayed object, the object in the top corner of the screen and so on), indeed the user may use any way of identifying an object that the data provider can identify.

The restrictions on the available objects and colours that the user may specify may be different from those mentioned above and generally will depend upon the particular application that the data processor implements. Thus, the data model may specify different or additional object names and colour names to those mentioned above. Where colour is concerned this may also include or be replaced by pattern names such as striped, spotted, checkerboard and so on, different types of colour fill such as fountain fill and so on and colour combinations. Also, depending upon the particular data processor, the colour data entry location and the changecolour action may be omitted.

It will of course be appreciated that the examples described above are only illustrative examples and that the present invention may be applied where the attributes that the user can control and the actions that the user can instruct the data processor to carry out are different from those specified above. For example, the present invention may be applied in systems where the objects have completely different attributes to those above, for example where the user can instruct the processor to carry out actions on attributes such as flight numbers, flight departure times, flight arrival times, and many other different attributes. The present invention is particularly useful in multi-modal applications.

In the above-described embodiments, the user interface provides a graphical user interface. Other forms of user interface may be used, for example the user interface may be at least partially or entirely a spoken user interface.

In the above embodiments the schema, data model and data model extension are implemented using XML (extensible Mark up Language), Xforms and Xpath with the data model extension 18 being provided by extending the XForms model bind property definition to allow application method calls within the calculate property of the Xforms model item. It is however possible that the present invention may be applied to other mark up languages and schemes.

In the above described examples, the user input interpreter, user interface and data processor are provided by programming the same computing apparatus. As another possibility, the user input interpreter, user interface and data processor may be provided by programming separate computing apparatus that communicate via a communications link such as a network, LAN, WAN, the Internet or an intranet. As another possibility, the user input interpreter and user interface may be provided separately from the data processor and may communicate with the data processor via such a communications link.

### APPENDIX 1

### XML MODEL SCHEMA

```
 <xsd: schema xmlns:xsd= "http://www.w3.org/2001/XMLschema"
          xmlns:xforms= "http://www.w3.org/2002/01/xforms"
 <xsd:include schemaLocation="instance.xsd"/>

   <xsd:element name="model">
     <xsd:complexType>
       <xsd:sequence>
              <xsd:elementref="instance"minOccurs="1"maxocuurs=
              "unbounded"/>
       </xsd:sequence>
       <xsd:attributename= "id" type= "xsd:string" use=
        "optional"/>
      </xsd:complexType>
 </xsd:element>

 </xsd: schema>
```

### APPENDIX 2

### XML MODEL SCHEMA INSTANCE

```
 <xsd: schema xmlns:xsd= "http://www.w3.org/2001/XMLschema"
         xmlns:xforms= "http://www.w3.org/2002/01/xforms"

 <xsd:element name="instance">
  <xsd:complexType>
     <xsd:sequence>
        <xsd:element ref="action"minOccurs= "1" maxOccurs=
    "1"/>
     <xsd:element ref="object"minOccurs= "1" maxOccurs= "1"/>
     <xsd:group ref="specification"minOccurs= "0" maxOccurs=
 "1"/>
          </xsd:sequence>
 <xsd:attributename= "id" type= "xsd:string" use= "optional"/>
       </xsd:complexType>
     </xsd:element>

 <xsd:element name="action">
       <xsd:simpleType>
    <xsd:restrictionbase= "xsd:string">
     <xsd:pattern value="move|copy|delete|resize|changecolour"/>
    </xsd:restriction>
       </xsd:simpleType>
    </xsd:element>

 <xsd:element name="object">
  <xsd:complexType>
 <xsd:choice minOccurs= "1" maxOccurs= "1">
  <xsd:element ref"location"/>
     <xsd:element name="shape">
    <xsd:simpleType>
        <xsd:restrictionbase= "xsd:string">
      <xsd:pattern value="circle | triangle | rectangle"/>
    </xsd:restriction>
  </xsd:simpleType>
   </xsd:element>
   <xsd:element name="shapeID" type= "xsd:string"/>
    </xsd:choice>
  </xsd:complexType>
 </xsd:element>

 <xsd:group name="specification">
    <xsd:choice>
  <xsd:element ref"location" minOccurs= "1" maxOccurs= "1"/>
  <xsd:element ref"colour" minOccurs= "1" maxOccurs= "1"/>
  <xsd:element ref"scale" type= "xsd:decimal " minoccurs= "1"
  maxOccurs= "1"/>
    </xsd:choice>
 </xsd:group>

   <xsd:element name="location">
    <xsd:complexType>
        <xsd:sequence>
         <xsd:element name="pos_x" type= "xsd: double"
         minOccurs= "1" maxOccurs+ "1"/>
         <xsd:element name="pos_y" type= "xsd: double"
         minoccurs= "1" maxOccurs+ "1"/>
       </xsd:sequence>
   </xsd:complexType>
   </xsd:element>

   <xsd:element name="colour">
   <xsd:simpleType>
        <xsd:restrictionbase= "xsd:string">
         <xsd:pattern value="red | blue | green "/>
    </xsd:restriction>
   </xsd:simpleType>
   </xsd:element>

 </xsd: schema>
```

### APPENDIX 3

### DATA MODEL

```
 <model>
  <instance src= "0">
  <action/>
  <object>
   <location>
    <pos_x/>
    <pos_y>
   </location>
   <shapeID/>
  </object>
  <location>
   <pos_x/>
   <pos_y>
  </location>
  <colour/>
  <scale/>
  </instance>
  <instance src= "1">
  <action/>
  <object>
  <shape/>
  <shapeID/>
  </object>
  <scale/>
  </instance>

 <bind ref= "instance/action"
 required= "truce () "/>

 <bind ref= "instance/object"
 required= "true ()" / >

 <bind ref= "instance/colour"
  required= "instance/action= 'changecolour' "
 relevant= "instance/action= 'changecolour' "/>

 <bind ref= "instance/location"
  required= "instance/action= 'move or instance/action= 'copy' "
 relevant= "instance/action= 'move or instance/action= 'copy' "/>
 <bind ref= "instance/scale"
 required= "instance/action= 'resize' "
 relevant= "instance/action= 'resize' "
 </model>
 type= "xsd:decimal"/>
```

### APPENDIX 4

### DATA MODEL EXTENSION

```
 <xforms:bind nodeset= "object_id"
     calculate= "app.xy2object(/object/pos_x, /object/pos y)">
     <xforms:bind nodeset= "object_id"
     calculate= "app.name2object(/object/shapeID)"/>

     <xforms:bind nodeset= "colour_id"
          Calculate= "app.xy2colour(/pos_x, /pos_y)" />
     <xforms:bind nodeset= "colour_id"
     calculates="app.name2colour(/colour/colour)" />
```

### APPENDIX 5

### MODEL INSTANCE

```
 <model id= "demo" xmlns:xforms="http://www.w3.org/20o2/01/xforms"
  xmlns: xsi=http://www.w3.org/2001/XML-instance">
 xsi:noNamespaceSchemaLocationmodel-instance.xsd">
 <instance id= "0" score= "0.71428573" src= "0">
  <action>move</action> .
  <object>
   <location>
    <pos_x>300</pos_x/>
    <pos_y>300</pos_y>
   </location>
 </object>
 <location>
   <pos_x>3 3 3 </pos_x>
   <pos y>400</pos_y>
  </location
 </instance>

 <instance id= "1" score= "0.71428573" src= "0">
  <action>move</action>
  <object>
   <location>
    <pos_x>333</pos_x/>
    <pos_y>444</pos_y>
   </location>
 </object>
 <location>
   <pos_x>300</pos_x>
   <pos_y>4 0 0</pos_y>
  </location
 </instance>

 <instance id= "2" score= "0.5714286" src= "0">
  <action>move</action>
  <object>
   <shape>circle</shape>
  </object>
 <location>
   <pos_x>300</pos_x>
   <pos_y>400</pos_y>
  </location
 </instance>

 <instance id= "3" score= "0.5714286" src= "0">
  <action>move</action>
 <object>
  <shape>circle</shape>
 </object>
 <location>
  <pos_x>333</pos_x>
  <pos_y>400</pos_y>
 </location
 </instance>

 <instance id= "4" score= "0.71428573" src= "0">
 <action>move</action>
 <object>
  <location>
    <pos_x>300</pos_x/>
    <pos_y>300</pos_y>
  </location>
 </object>
 <location>
  <pos_x>333</pos_x>
  <pos_y>444</pos_y>
 </location
 </instance>

 <instances id= "5" score= "0.71428573" src= "0">
 <action>move</action>
 <object>
  <location>
    <pos_x>333</pos_x/>
    <pos_y>400</pos_y>
  </location>
 </object>
 <location>
  <pos_x>300</pos_x>
  <pos_y>444</pos_y>
 </location
 </instance>
 
 <instance id= "6" score= "0.5714286" src= "0">
  <action>move</action>
 <object>
  <shape>circle</shape>
 </object>
 <location>
  <pos_x>300</pos_x>
  <pos_y>444</pos_y>
 </location
 </instance>

 <instance id= "7" score= "0.5714286" src= "0">
 <action>move</action>
 <object>
  <shape>circle</shape>
 </objects>
 <location>
  <pos_x>333</pos_x>
  <pos_y>444</pos_y>
 </location
 </instance>

 <instance id= "8" score= "0.5714286" src= "0">
 <action>resize</action>
 <object>
  <location>
  <pos x>300</pos x>
  <pos_y>444</pos y>
 </location>
 </object>
 <scale>90</scale>
 </instance>

 <instance id= "9" score= "0.5714286" src= "0">
 <action>resize</action>
 <object>
  <location>
  <pos_x>333</pos_x>
  <pos_y>444</pos_y>
 </location>
 </object>
 <scale>90</scale>
 </instance>

 <instance id= "10" score= "0.42857143" src= "0">
 <action>resize</action>
 <object>
  <shape>circle</shape>
  </object>
  <scale>90</scale>
 </instance>

 <instance id= "11" score= "0.5714286" src= "0">
 <action>resize</action>
 <object>
  <location>
  <pos_x>300</pos_x>
  <pos_y>400</pos_y>
 </location>
 </object>
 <scale>90</scale>
 </instance>

 <instance id= "12" score= "0.5714286" src= "0">
 <action>resize</action>
 <object>
  <location>
  <pos_x>333</pos_x>
  <pos_y>400</pos_y>
 </location>
 </object>
 <scale>90</scale>
 </instance>

 </model>

 <instance src= "1">
 <action/>
 <object>
    <shape/>
    <shapeID/>
 </object>
 <scale/>
 </instance>

 <bind ref= "instance/action"
 required= "true () "/>

 <bind ref= "instance/object"
 required= "true () "/>

 <bind ref= "instance/colour"
 required= "instance/action= 'changecolour' "
 relevant= "instance/action= 'changecolour' "/>
 <bind ref= "instance/location"
 required= "instance/action= 'move' or instance/action= 'copy' "
 relevant= "instance/action= 'move' or instance/action= 'copy' "/>

 <bind ref= "instance/scale"
 required= "instance/action= 'resize' "

 relevant= "instance/action= 'resize' "
 type= "xsd:decimal"/>
 </model>
```

## Claims

1. A user input interpreter apparatus comprising:
receiving means (4) for receiving user input data specifying an object and an operation to be carried out on the object; **characterized by** further comprising:
associating means (8) for associating received user input data with semantic identifiers in accordance with semantic rules (11,13); and
populating means (9) for populating data entry locations of a data model (15) in accordance with semantically identified user input data associated with the semantic identifiers specified for those data entry locations, wherein
the data model (15) has data model extension data (18) identifying at least one process that has to be carried out by a data processor (3) to identify an object specified by the user; and
the populating means (9) is arranged to communicate with the data processor (3) to instruct the data processor (3) to carry out a process identified by the extension data (18) and to return object identifier data that identifies to the data processor (3) the object specified by the user.

2. A user input interpreter apparatus according to claim 1, wherein the populating means (9) is arranged to communicate with the data processor (3) to instruct the data processor (3) to carry out a process identified by the extension data (18) and to return object identifier data that identifies to the data processor (3) when data entry locations of the data model have been populated in accordance with user input data specifying an object and an operation to be carried out on that object.

3. A user input interpreter apparatus according to claim 1 or 2, wherein the receiving means (4) comprises a plurality of different user input mode receiving means (4) .

4. A user input interpreter apparatus according to claim 3, wherein the associating means (8) comprises a respective semantic meaning associater (81,82) for each input mode and integrating means (19) is provided for integrating semantically identified user input data from the different semantic meaning associaters (81,82) .

5. A user input interpreter apparatus according to claim 4, wherein the integrating means (19) is arranged to integrate semantically identified user input data from the different semantic meaning associaters (81,82) when the different mode user input receiving means (4) receive user input simultaneously or within a predetermined time of one another.

6. A user input interpreter apparatus according to claim 5, wherein the integrating means (19) is arranged to consider semantically identified user input data from the different semantic meaning associaters (81,82) to be integrated to be of different semantic data types.

7. A user input interpreter apparatus according to any of the preceding claims adapted for use with a data processor (3) having a graphical user interface (4b) to enable a user to provide a data processor (3) with a user command for controlling an operation to be carried out on an object displayed on the graphical user interface (4b) of the data processor (3).

8. A user input interpreter apparatus according to any of claims 3 to 6 adapted for use with a data processor (3) having a graphical user interface (4b) to enable a user to provide a data processor (3) with a user command for controlling an operation to be carried out on an object displayed on the graphical user interface (4b) of the data processor (3), wherein the plurality of different user input mode receiving means (4) comprises a position data input mode receiving means (4) and a text data input mode receiving means (4).

9. A user input interpreter apparatus according to claim 8 , wherein the data model (15) has an object position data entry location associated with semantic identifier specifying means specifying a semantic identifier representing position and an object identity data entry location associated with semantic identifier specifying means specifying a semantic identifier representing an object identity.

10. A user input interpreter apparatus according to any of claims 1 to 9, comprising data model constraining means for constraining the user input available for the user command.

11. A user input interpreter apparatus according to any of claims 3 to 9, comprising data model constraining means for constraining the user input available for the user command.

12. A user input interpreter apparatus according to claim 9, comprising data model constraining means for constraining the user input available for the user command and wherein the data model constraining means is arranged to allow population of either the object position data entry location or the object identity data entry location.

13. A user input interpreter apparatus according to any of claims 3 to 9, 11 or 12, wherein the data model also allows a user to specify an object colour.

14. A user input interpreter apparatus according to claim 13, wherein the data model has a colour position data entry location associated with semantic identifier specifying means specifying a semantic identifier representing position and a colour identity data entry location associated with semantic identifier specifying means specifying a semantic identifier representing a colour identity.

15. A user input interpreter apparatus according to any of claims 3 to 9, wherein the data model also allows a user to specify an object colour, the data model has a colour position data entry location associated with semantic identifier specifying means specifying a semantic identifier representing position and a colour identity data entry location associated with semantic identifier specifying means specifying a semantic identifier representing a colour identity and data model providing means has data model constraining means for constraining the user input available for the user command and the data model constraining means is arranged to allow the population of either the colour position data entry location or colour identity data entry location .

16. A user input interpreter apparatus according to claim 10, 11 or 12 or 15, wherein the data model constraining means is arranged to constrain the objects to a set of specified objects.

17. A user input interpreter apparatus according to claim 16, wherein the data model constraining means is arranged to constrain the set of specified objects to comprise rectangle, triangle and circle

18. A user input interpreter apparatus according to claim 10, 11 or 12, 15, 16 or 17, wherein the data model constraining means is arranged to constrain the operations to a set of specified operations.

19. A user input interpreter apparatus according to claim 18, wherein the data model constraining means is arranged to constrain the set of specified operations to comprise: move, copy, delete, resize.

20. A user input interpreter apparatus according to claim 18 or 19 when dependent on claim 13, 14 or 15, wherein the data model constraining means is arranged to constrain the set of specified operations to comprise: move, copy, delete, resize and change colour.

21. A user input interpreter apparatus according to any preceding claim, wherein requirement determining means is provided to require user input associated with a specific semantic identifier for an operation.

22. A user input interpreter apparatus according to claim 21 when dependent on claim 19 or 20, wherein the requirement determining means is provided to require user input associated with a semantic identifier representing position when the operation is move or copy.

23. A user input interpreter apparatus according to claim 22 or claim 21 when dependent on claim 19 or 20, wherein the requirement determining means is arranged to require user input associated with a semantic identifier representing scale when the operation is resize.

24. A user input interpreter apparatus according to claim 22 or 23 or claim 21 when dependent on claim 19 or 20, wherein the requirement determining means is arranged to require user input associated with a semantic identifier representing colour when the operation is change colour.

25. A user input interpreter apparatus according to any preceding claim, wherein the data model is provided as an XForms data model and the data model extension data (18) is provided as an extension of the XForms model bind property to allow process or method calls within the calculate property of the XForms model item.

26. A user input interpreter apparatus according to claim 25 when dependent on any of claims 10 to 12 or 15 to 20, wherein the data model constraining means comprises an XML schema.

27. A user input interpreter apparatus according to claim 25 or 26 when dependent any of claims 21 to 24, wherein the requirement determining means is provided as binding references of the XForms data model.

28. Data processing apparatus comprising:
a data processor (3); and
a user input interpreter apparatus in accordance with any of the preceding claims,
wherein the data processor (3) comprises a. word processor, an image processor, a command processor for controlling operation of a computer controlled machine or tool, or other data processor (3) that may be implemented by programming computer apparatus with a software application.

29. Data processing apparatus according to claim 28, further comprising user interface devices comprising at least one of a keyboard (32), a microphone (33), a writing tablet (34), a pointing device (35).

30. A data model provider apparatus for a user input interpreter for interpreting user input to enable a user to provide a data processor (3) with a user command for controlling an operation to be carried out on an object presented to the user by a user interface of the data processor (3), the data model provider comprising:
data model structure providing means providing a data model structure providing data entry location elements for enabling a data model developer to specify object and operation data entry locations to be populated in accordance with user input data to enable a user command to be generated for causing the data processor (3) to carry out an operation on an object, each data entry location element specifying the semantic identifier required to be associated with received user input data for that data entry location to be populated and a data model extension structure enabling the data model developer to specify extension data (18) identifying at least one process that has to be carried out by the data processor (3) to identify an object specified by the user.

31. A data model provider apparatus according to claim 30, wherein the data model structure also provides a data entry element for a data model developer to specify a colour data entry location.

32. A data model provider apparatus according to claim 30 or 31, wherein the data model structure has a data model constraining structure configured to constrain the user input available for particular data entry elements.

33. A data model provider apparatus according to claim 32, wherein the data model constraining structure is configured to constrain an object or colour to be specified by user input representing an identity or position of the colour or object.

34. A data model provider apparatus according to claim 32 or 33, wherein the data model constraining structure is configured to constrain a data entry location to at least one of:
only certain options;
certain named objects where the data entry location requires data having a semantic identifier representing objects;
certain colours where the data entry location requires data having a semantic identifier representing colours; and
certain actions where the data entry location requires data having a semantic identifier representing actions.

35. A data model provider apparatus according to any of claims 30 to 34, wherein the data model structure providing means has a requirement determining structure arranged to require user input associated with a specific semantic identifier for an operation.

36. A data model provider apparatus according to claim 35, wherein the requirement determining structure is arranged to at least one of:
require user input associated with a semantic identifier representing position when the operation is move or copy;
require user input associated with a semantic identifier representing scale when the operation is resize; and
require user input associated with a semantic identifier representing colour when the operation is change colour.

37. A data model provider apparatus according to any of claims 30 to 36, wherein the data model structure providing means is arranged to provide an XForms data model structure and the data model extension structure is provided as an extension of the XForms model bind property to allow process or method calls within the calculate property of the XForms model item.

38. A data model provider apparatus according to claim 37 when dependent on claim 32, 33 or 34, wherein the data model constraining structure is provided by an XML schema structure.

39. A data model provider apparatus according to claim 38 or 37 when dependent on claim 35 or 36, wherein the requirement determining structure is configured to provide requirements as binding references of the XForms data model.

40. A user input interpreter apparatus for providing a user input interpreter for interpreting user input to enable a user to provide a data processor (3) with a user command for controlling an operation to be carried out on an object presented to the user by a user interface of the data processor (3), the user input interpreter apparatus comprising:
a semantic rule store arranged to store semantic rules associating different possible user input data with semantic identifiers identifying the semantic data type of that possible user input data;
a data model provider apparatus in accordance with any of claims 30 to 39;
semantic meaning associating means (8) for associating received user input data with semantic identifiers in accordance with semantic rules stored in the semantic rules store to provide semantically identified user input data; and
data model populating means (9) for populating data entry locations of a data model provided by the data model provider apparatus in accordance with semantically identified user input data associated with the semantic identifiers specified for those data entry locations, the data model populating means (9) being arranged to communicate with the data processor (3) to instruct the data processor (3) to carry out a process identified by the extension data (18) and to return object identifier data that identifies to the data processor (3) the object specified by the user and the data model populating means (9) being arranged to complete population of the data model to generate the user command upon receipt of the object identifier data.

41. A method of interpreting user input, the method comprising the steps of:
accessing a data model having object and operation data entry locations;
receiving (S1) user input data specifying an object presented to the user by the user interface and an operation to be carried out on the object; **characterized by** further comprising:
associating (S2, S3) received user input data with semantic identifiers in accordance with semantic rules; and
populating data entry locations of the data model in accordance with semantically identified user input data associated with the semantic identifiers specified for those data entry locations;
wherein the data model has data model extension data (18) identifying at least one process that has to be carried out by a data processor (3) to identify an object specified by the user; and the populating step comprises the step of communicating with the data processor (3) to instruct the data processor (3) to carry out a process identified by the extension data (18) and to return object identifier data that identifies the object specified by the user.

42. A method of providing a data model for a user input interpreter for interpreting user input to enable a user to provide a data processor (3) with a user command for controlling an operation to be carried out on an object presented to the user by a user interface of the data processor (3), the method comprising:
providing a data model structure providing data entry location elements for enabling a data model developer to specify object and operation data entry locations to be populated in accordance with user input data to enable a user command to be generated for causing the data processor (3) to carry out an operation on an object, each data entry location elements specifying the semantic identifier required to be associated with received user input data for that data entry location to be populated and a data model extension structure enabling the data model developer to specify extension data (18) identifying at least one process that has to be carried out by the data processor (3) to identify an object specified by the user.

43. A method according to claim 42, wherein the data model structure provides a data entry element for a data model developer to specify a colour data entry location.

44. A method according to claim 42 or 43, wherein the data model structure has a data model constraining structure constraining the user input available for particular data entry elements.

45. A method according to claim 44, wherein the data model constraining structure constrains at least one of:
an object or colour to be specified by user input representing an identity or position of the colour or object;
a data entry location to only certain options;
a data entry location to certain named objects where the data entry location requires data having a semantic identifier representing objects;
a data entry location to certain colours where the data entry location requires data having a semantic identifier representing colours; and
certain actions where the data entry location requires data having a semantic identifier representing actions.

46. A method according to any of claims 42 to 45, wherein the data model structure has requirements requiring user input associated with a specific semantic identifier for an operation.

47. A method according to claim 46, wherein the data model strucutre requirements require user input associated with a semantic identifier representing position when the operation is move or copy, require user input associated with a semantic identifier representing scale when the operation is resize and require user input associated with a semantic identifier representing colour when the operation is change colour.

48. A method according to any of claims 42 to 47, wherein the data model structure is an XForms data model structure and the data model extension structure is provided as an extension of the XForms model bind property to allow process or method calls within the calculate property of the XForms model item.

49. A method according to claim 48 when dependent on claim 44 or 45, wherein the data model constraints are provided by an XML schema structure.

50. A method according to claim 49 or 48 when dependent on claim 46 or 47, wherein the requirements are provided as binding references of the XForms data model.

51. Program instructions for programming a processor to carry out a method in accordance with any of claims 41 to 50.

## Patentansprüche

1. Benutzereingabeübersetzervorrichtung mit:
einer Empfangseinrichtung (4) zum Empfangen von Benutzereingabedaten, die ein Objekt und eine auf dem Objekt auszuführende Operation spezifizieren,
**gekennzeichnet durch**:
eine Assoziationseinrichtung (8) zum Assoziieren von empfangenen Benutzereingabedaten mit semantischen Kennungen gemäß semantischen Regeln (11, 13), und
eine Besetzungseinrichtung (9) zum Besetzen von Dateneintragungsorten eines Datenmodells (15) gemäß semantisch identifizierten Benutzereingabedaten, die mit den für jene Dateneintragungsorte spezifizierten semantischen Kennungen assoziiert sind, wobei
das Datenmodell (15) Datenmodellerweiterungsdaten (18) aufweist, die zumindest einen Prozess identifizieren, der **durch** einen Datenprozessor (3) auszuführen ist, um ein **durch** den Benutzer spezifiziertes Objekt zu identifizieren, und
die Besetzungseinrichtung (9) eingerichtet ist, mit dem Datenprozessor (3) zu kommunizieren, um den Datenprozessor (3) anzuweisen, einen **durch** die Erweiterungsdaten (18) identifizierten Prozess auszuführen und um Objektkennungsdaten zurückzugeben, die gegenüber dem Datenprozessor (3) das **durch** den Benutzer spezifizierte Objekt identifizieren.

2. Benutzereingabeübersetzervorrichtung gemäß Anspruch 1, wobei die Besetzungseinrichtung (9) eingerichtet ist, mit dem Datenprozessor (3) zu kommunizieren, um den Datenprozessor (3) anzuweisen, einen durch die Erweiterungsdaten (18) identifizierten Prozess auszuführen und Objektkennungsdaten zurückzugeben, die gegenüber dem Datenprozessor (3) identifizieren, wenn Dateneintragungsorte des Datenmodells gemäß Benutzereingabedaten besetzt wurden, die ein Objekt und eine auf jenem Objekt auszuführende Operation spezifizieren.

3. Benutzereingabeübersetzervorrichtung gemäß Anspruch 1 oder 2, wobei die Empfangseinrichtung (4) eine Vielzahl von unterschiedlichen Benutzereingabebetriebsartempfangseinrichtungen (4) umfasst.

4. Benutzereingabeübersetzervorrichtung gemäß Anspruch 3, wobei die Assoziierungseinrichtung (8) einen jeweiligen Semantikbedeutungsassoziierer (81, 82) für jede Eingabebetriebsart umfasst und eine Integrationseinrichtung (19) zum Integrieren von semantisch identifizierten Benutzereingabedaten von den unterschiedlichen Semantikbedeutungsassoziierern (81, 82) bereitgestellt ist.

5. Benutzereingabeübersetzervorrichtung gemäß Anspruch 4, wobei die Integrationseinrichtung (19) eingerichtet ist, semantisch identifizierte Benutzereingabedaten von den unterschiedlichen Semantikbedeutungsassoziierern (81, 82) zu integrieren, wenn die unterschiedlichen Betriebsartbenutzereingabeempfangseinrichtungen (4) eine Benutzereingabe simultan oder innerhalb einer vorbestimmten Zeit hinsichtlich einander empfangen.

6. Benutzereingabeübersetzervorrichtung gemäß Anspruch 5, wobei die Integrationseinrichtung (19) eingerichtet ist, semantisch identifizierte, zu integrierende Benutzereingabedaten von den unterschiedlichen Semantikbedeutungsassoziierern (81, 82) als von unterschiedlichen semantischen Datentypen stammend zu erachten.

7. Benutzereingabeübersetzervorrichtung gemäß einem der vorstehenden Ansprüche, die zu einer Verwendung mit einem Datenprozessor (3) mit einer graphischen Benutzerschnittstelle (4b) angepasst ist, um einem Benutzer zu ermöglichen, einen Datenprozessor (3) mit einem Benutzerbefehl zum Steuern einer Operation, die auf einem auf der graphischen Benutzerschnittstelle (4b) des Datenprozessors (3) angezeigten Objekt auszuführen ist, zu versorgen.

8. Benutzereingabeübersetzervorrichtung gemäß einem der Ansprüche 3 bis 6, die zu einer Verwendung mit einem Datenprozessor (3) mit einer graphischen Benutzeroberfläche (4b) angepasst ist, um einem Benutzer zu ermöglichen, einen Datenprozessor (3) mit einem Benutzerbefehl zum Steuern einer Operation, die auf einem auf der graphischen Benutzerschnittstelle (4b) des Datenprozessors (3) angezeigten Objekt auszuführen ist, zu versorgen, wobei die Vielzahl von unterschiedlichen Benutzereingabebetriebsartempfangseinrichtungen (4) eine Positionsdateneingabebetriebsartempfangseinrichtung (4) und eine Textdateneingabebetriebsartempfangseinrichtung (4) umfasst.

9. Benutzereingabeübersetzervorrichtung gemäß Anspruch 8, wobei das Datenmodell (15) einen Objektpositionsdateneintragungsort aufweist, der mit einer Semantikkennungsspezifikationseinrichtung assoziiert ist, die eine eine Position darstellende semantische Kennung spezifiziert, und einen Objektidentitätsdateneintragungs-ort aufweist, der mit einer Semantikkennungsspezifikationseinrichtung assoziiert ist, die eine eine Objektidentität darstellende semantische Kennung spezifiziert.

10. Benutzereingabeübersetzervorrichtung gemäß einem der Ansprüche 1 bis 9, mit einer Datenmodellbeschränkungseinrichtung zum Beschränken der für den Benutzerbefehl zur Verfügung stehenden Benutzereingabe.

11. Benutzereingabeübersetzervorrichtung gemäß einem der Ansprüche 3 bis 9, mit einer Datenmodellbeschränkungseinrichtung zum Beschränken der für den Benutzerbefehl zur Verfügung stehenden Benutzereingabe.

12. Benutzereingabeübersetzervorrichtung gemäß Anspruch 9, mit einer Datenmodellbeschränkungseinrichtung zum Beschränken der für den Benutzerbefehl zur Verfügung stehenden Benutzereingabe, und wobei die Datenmodellbeschränkungseinrichtung eingerichtet ist, eine Besetzung entweder des Objektpositionsdateneintragungsorts oder des Objektidentitätsdateneintragungsorts zuzulassen.

13. Benutzereingabeübersetzervorrichtung gemäß einem der Ansprüche 3 bis 9, 11 oder 12, wobei das Datenmodell ebenso zulässt, dass ein Benutzer eine Objektfarbe spezifiziert.

14. Benutzereingabeübersetzervorrichtung gemäß Anspruch 13, wobei das Datenmodell einen Farbpositionsdateneintragungsort aufweist, der mit einer Semantikkennungsspezifikationseinrichtung assoziiert ist, die eine eine Position darstellende semantische Kennung spezifiziert, und einen Farbidentitätsdateneintragungsort aufweist, der mit einer Semantikkennungsspezifikationseinrichtung assoziiert ist, die eine eine Farbidentität darstellende semantische Kennung spezifiziert.

15. Benutzereingabeübersetzervorrichtung gemäß einem der Ansprüche 3 bis 9, wobei das Datenmodell ebenso zulässt, dass ein Benutzer eine Objektfarbe spezifiziert, das Datenmodell einen Farbpositionsdateneintragungsort aufweist, der mit einer Semantikkennungsspezifikationseinrichtung assoziiert ist, die eine eine Position darstellende semantische Kennung spezifiziert, und einen Farbidentitätsdateneintragungsort aufweist, der mit einer Semantikkennungsspezifikationseinrichtung assoziiert ist, die eine eine Farbidentität darstellende semantische Kennung spezifiziert, und eine Datenmodellbereitstellungseinrichtung eine Datenmodellbeschränkungseinrichtung zum Beschränken der für den Benutzerbefehl zur Verfügung stehenden Benutzereingabe aufweist und die Datenmodellbeschränkungseinrichtung eingerichtet ist, die Besetzung entweder des Farbpositionsdateneintragungsorts oder des Farbidentitätsdateneintragungsorts zuzulassen.

16. Benutzereingabeübersetzervorrichtung gemäß Anspruch 10, 11 oder 12 oder 15, wobei die Datenmodellbeschränkungseinrichtung eingerichtet ist, die Objekte auf einen Satz von spezifizierten Objekten zu beschränken.

17. Benutzereingabeübersetzervorrichtung gemäß Anspruch 16, wobei die Datenmodellbeschränkungseinrichtung eingerichtet ist, den Satz von spezifizierten Objekten zu beschränken, ein Rechteck, ein Dreieck und einen Kreis zu umfassen.

18. Benutzereingabeübersetzervorrichtung gemäß Anspruch 10, 11 oder 12, 15, 16 oder 17, wobei die Datenmodellbeschränkungseinrichtung eingerichtet ist, die Operationen auf einen Satz von spezifizierten Operationen zu beschränken.

19. Benutzereingabeübersetzervorrichtung gemäß Anspruch 18, wobei die Datenmodellbeschränkungseinrichtung eingerichtet ist, den Satz von spezifizierten Operationen zu beschränken, um zu umfassen: Bewegen, Kopieren, Löschen, Größe Ändern.

20. Benutzereingabeübersetzervorrichtung gemäß Anspruch 18 oder 19 abhängig von Anspruch 13, 14 oder 15, wobei die Datenmodellbeschränkungseinrichtung eingerichtet ist, den Satz von spezifizierten Operationen zu beschränken, um zu umfassen: Bewegen, Kopieren, Löschen, Größe Ändern und Farbe Ändern.

21. Benutzereingabeübersetzervorrichtung gemäß einem der vorstehenden Ansprüche, wobei eine Anforderungsbestimmungseinrichtung bereitgestellt ist, um eine mit einer spezifischen semantischen Kennung assoziierte Benutzereingabe für eine Operation anzufordern.

22. Benutzereingabeübersetzervorrichtung gemäß Anspruch 21 abhängig von Anspruch 19 oder 20, wobei die Anforderungsbestimmungseinrichtung bereitgestellt ist, um eine Benutzereingabe anzufordern, die mit einer eine Position darstellenden semantischen Kennung assoziiert ist, wenn die Operation Bewegen oder Kopieren ist.

23. Benutzereingabeübersetzervorrichtung gemäß Anspruch 22 oder 21 abhängig von Anspruch 19 oder 20, wobei die Anforderungsbestimmungseinrichtung eingerichtet ist, eine Benutzereingabe anzufordern, die mit einer einen Maßstab darstellenden semantischen Kennung assoziiert ist, wenn die Operation Größe Ändern ist.

24. Benutzereingabeübersetzervorrichtung gemäß Anspruch 22 oder 23 oder Anspruch 21 abhängig von Anspruch 19 oder 20, wobei die Anforderungsbestimmungseinrichtung eingerichtet ist, eine Benutzereingabe anzufordern, die mit einer eine Farbe darstellenden semantischen Kennung assoziiert ist, wenn die Operation Farbe Ändern ist.

25. Benutzereingabeübersetzervorrichtung gemäß einem der vorstehenden Ansprüche, wobei das Datenmodell als ein XForms- Datenmodell bereitgestellt ist, und die Datenmodellerweiterungsdaten (18) als eine Erweiterung der XForms- Modellbindeeigenschaft bereitgestellt sind, um Prozess- oder Methodenaufrufe innerhalb der Berechnungseigenschaft der XForms- Modelleinheit zuzulassen.

26. Benutzereingabeübersetzervorrichtung gemäß Anspruch 25 abhängig von einem der Ansprüche 10 bis 12 oder 15 bis 20, wobei die Datenmodellbeschränkungseinrichtung ein XML- Schema umfasst.

27. Benutzereingabeübersetzervorrichtung gemäß Anspruch 25 oder 26 abhängig von einem der Ansprüche 21 bis 24, wobei die Anforderungsbestimmungseinrichtung als Bindereferenzen des XForms- Datenmodells bereitgestellt ist.

28. Datenverarbeitungsvorrichtung mit:
einem Datenprozessor (3), und
einer Benutzereingabeübersetzervorrichtung gemäß einem der vorstehenden Ansprüche,
wobei der Datenprozessor (3) einen Wortprozessor, einen Bildprozessor, einen Befehlsprozessor zum Steuern einer Operation einer computergesteuerten Maschine oder Werkzeugs, oder einen anderen Datenprozessor (3) umfasst, der durch Programmieren einer Computervorrichtung mit einer Softwareanwendung implementiert sein kann.

29. Datenverarbeitungsvorrichtung gemäß Anspruch 28, weiterhin mit Benutzerschnittstellengeräten mit zumindest einer Tastatur (32), einem Mikrofon (33), einem Schreibbrett (34) und/oder einem Zeigergerät (35).

30. Datenmodellbereitstellervorrichtung für einen Benutzereingabeübersetzer zum Übersetzen einer Benutzereingabe, um einem Benutzer zu ermöglichen, einen Datenprozessor (3) mit einem Benutzerbefehl zum Steuern einer Operation, die auf einem Objekt durchzuführen ist, das dem Benutzer durch eine Benutzerschnittstelle des Datenprozessors (3) präsentiert wird, zu versorgen, mit:
einer Datenmodellstrukturbereitstellungseinrichtung, die eine Datenmodellstruktur bereitstellt, die Dateneintragungsortelemente bereitstellt, um einem Datenmodellentwickler zu ermöglichen, Objekt- und Operationsdateneintragungsorte, die gemäß Benutzereingabedaten zu besetzen sind, zu spezifizieren, um zu ermöglichen, dass ein Benutzerbefehl erzeugt wird, um den Datenprozessor (3) zu veranlassen, eine Operation auf einem Objekt auszuführen, wobei jedes Dateneintragungsortelement die semantische Kennung spezifiziert, die mit empfangenen Benutzereingabedaten für jenen zu besetzenden Dateneintragungsort assoziiert sein muss, und eine Datenmodellerweiterungsstruktur dem Datenmodellentwickler ermöglicht, Erweiterungsdaten (18) zu spezifizieren, die zumindest einen Prozess identifizieren, der durch den Datenprozessor (3) ausgeführt werden muss, um ein durch den Benutzer spezifiziertes Objekt zu identifizieren.

31. Datenmodellbereitstellervorrichtung gemäß Anspruch 30, wobei die Datenmodellstruktur ebenso ein Dateneintragungselement für einen Datenmodellentwickler bereitstellt, um einen Farbdateneintragungsort zu spezifizieren.

32. Datenmodellbereitstellervorrichtung gemäß Anspruch 30 oder 31, wobei die Datenmodellstruktur eine Datenmodellbeschränkungsstruktur aufweist, die konfiguriert ist, die für einzelne Dateneintragungselemente zur Verfügung stehende Benutzereingabe zu beschränken.

33. Datenmodellbereitstellervorrichtung gemäß Anspruch 32, wobei die Datenmodellbeschränkungsstruktur konfiguriert ist, ein Objekt oder eine Farbe, die durch eine Benutzereingabe zu spezifizieren sind, die eine Identität oder eine Position der Farbe oder des Objekts darstellt, zu beschränken.

34. Datenmodellbereitstellervorrichtung gemäß Anspruch 32 oder 33, wobei die Datenmodellbeschränkungsstruktur konfiguriert ist, einen Dateneintragungsort zu beschränken auf zumindest eine von:
lediglich gewissen Optionen,
gewissen benannten Objekten, bei denen der Dateneintragungsort Daten mit einer Objekte darstellenden semantischen Kennung erfordert,
gewissen Farben, bei denen der Dateneintragungsort Daten mit einer Farben darstellenden semantischen Kennung erfordert, und
gewissen Aktionen, bei denen der Dateneintragungsort Daten mit einer Aktionen darstellenden semantischen Kennung erfordert.

35. Datenmodellbereitstellervorrichtung gemäß einem der Ansprüche 30 bis 34, wobei die Datenmodellstrukturbereitstellungseinrichtung eine Anforderungsbestimmungsstruktur aufweist, die eingerichtet ist, eine mit einer spezifischen semantischen Kennung für eine Operation assoziierte Benutzereingabe anzufordern.

36. Datenmodellbereitstellervorrichtung gemäß Anspruch 35, wobei die Anforderungsbestimmungsstruktur zu zumindest einem der folgenden eingerichtet ist:
Anfordern einer Benutzereingabe, die mit einer eine Position darstellenden semantischen Kennung assoziiert ist, wenn die Operation Bewegen oder Kopieren ist,
Anfordern einer Benutzereingabe, die mit einer einen Maßstab darstellenden semantischen Kennung assoziiert ist, wenn die Operation Größe ändern ist, und
Anfordern einer Benutzereingabe, die mit einer eine Farbe darstellenden semantischen Kennung assoziiert ist, wenn die Operation Farbe ändern ist.

37. Datenmodellbereitstellervorrichtung gemäß einem der Ansprüche 30 bis 36, wobei die Datenmodellstrukturbereitstellungseinrichtung eingerichtet ist, eine XForms-Datenmodellstruktur bereitzustellen, und die Datenmodellerweiterungsstruktur als eine Erweiterung der XForms-Modellbindeeigenschaft bereitgestellt ist, um Prozess- oder Methodenaufrufe innerhalb der Berechnungseigenschaft der XForms- Modelleinheit zuzulassen.

38. Datenmodellbereitstellervorrichtung gemäß Anspruch 37 abhängig von Anspruch 32, 33 oder 34, wobei die Datenmodellbeschränkungsstruktur durch eine XML- Schemastruktur bereitgestellt ist.

39. Datenmodellbereitstellervorrichtung gemäß Anspruch 38 oder 37 abhängig von Anspruch 35 oder 36, wobei die Anforderungsbestimmungsstruktur konfiguriert ist, Anforderungen als Bindereferenzen des XForms- Datenmodells bereitzustellen.

40. Benutzereingabenübersetzervorrichtung zum Bereitstellen eines Benutzereingabenübersetzers zum Übersetzen einer Benutzereingabe, um einem Benutzer zu ermöglichen, einen Datenprozessor (3) mit einem Benutzerbefehl zum Steuern einer Operation zu versorgen, die auf einem Objekt auszuführen ist, das dem Benutzer durch eine Benutzerschnittstelle des Datenprozessors (3) präsentiert wird, mit:
einem Speicher für semantische Regeln, der eingerichtet ist, semantische Regeln zu speichern, die unterschiedliche mögliche Benutzereingabedaten mit den semantischen Datentyp jener möglichen Benutzereingabedaten identifizierenden semantischen Kennungen assoziieren,
einer Datenmodellbereitstellervorrichtung gemäß einem der Ansprüche 30 bis 39,
einer Semantikbedeutungsassoziierungseinrichtung (8) zum Assoziieren von empfangenen Benutzereingabedaten mit semantischen Kennungen gemäß in dem Speicher für semantische Regeln gespeicherten semantischen Regeln, um semantisch identifizierte Benutzereingabedaten bereitzustellen, und
einer Datenmodellbesetzungseinrichtung (9) zum Besetzen von Dateneintragungsorten eines durch die Datenmodellbereitstellervorrichtung bereitgestellten Datenmodells gemäß semantisch identifizierten Benutzereingabedaten, die mit den für jene Dateneintragungsorte spezifizierten semantischen Kennungen assoziiert sind, wobei die Datenmodellbesetzungseinrichtung (9) eingerichtet ist, mit dem Datenprozessor (3) zu kommunizieren, um den Datenprozessor (3) anzuweisen, einen durch die Erweiterungsdaten (18) identifizierten Prozess auszuführen und Objektkennungsdaten zurückzugeben, die gegenüber dem Datenprozessor (3) das durch den Benutzer spezifizierte Objekt identifizieren, und wobei die Datenmodellbesetzungseinrichtung (9) eingerichtet ist, eine Besetzung des Datenmodells zu vollenden, um den Benutzerbefehl bei Empfang der Objektkennungsdaten zu erzeugen.

41. Verfahren zum Übersetzen einer Benutzereingabe, mit den Schritten:
Zugreifen auf ein Datenmodell mit Objekt- und Operationsdateneintragungsorten,
Empfangen (S1) von Benutzereingabedaten, die ein dem Benutzer durch die Benutzerschnittstelle präsentiertes Objekt und eine auf dem Objekt auszuführende Operation spezifizieren, **dadurch gekennzeichnet dass** es weiterhin umfasst:
Assoziieren (S2, S3) von empfangenen Benutzereingabedaten mit semantischen Kennungen gemäß semantischen Regeln, und
Besetzen von Dateneintragungsorten des Datenmodells gemäß semantisch identifizierten Benutzereingabedaten, die mit den für jene Dateneintragungsorte spezifizierten semantischen Kennungen assoziiert sind,
wobei das Datenmodell Datenmodellerweiterungsdaten (18) aufweist, die zumindest einen Prozess identifizieren, der durch einen Datenprozessor (3) auszuführen ist, um ein durch den Benutzer spezifiziertes Objekt zu identifizieren, und der Besetzungsschritt den Schritt des Kommunizierens mit dem Datenprozessor (3) umfasst, um den Datenprozessor (3) anzuweisen, einen durch die Erweiterungsdaten (18) identifizierten Prozess auszuführen und Objektkennungsdaten zurückzugeben, die das durch den Benutzer spezifizierte Objekt identifizieren.

42. Verfahren zum Bereitstellen eines Datenmodells für einen Benutzereingabeübersetzer zum Übersetzen einer Benutzereingabe, um einem Benutzer zu ermöglichen, einen Datenprozessor (3) mit einem Benutzerbefehl zum Steuern einer Operation zu versorgen, die auf einem dem Benutzer durch eine Benutzerschnittstelle des Datenprozessors (3) präsentierten Objekt auszuführen ist, mit den Schritten:
Bereitstellen einer Datenmodellstruktur, die Dateneintragungsortelemente bereitstellt, um einem Datenmodellentwickler zu ermöglichen, Objekt- und Operationsdateneintragungsorte, die gemäß Benutzereingabedaten zu besetzen sind, zu spezifizieren, um zu ermöglichen, dass ein Benutzerbefehl erzeugt wird, den Datenprozessor (3) zu veranlassen, eine Operation auf einem Objekt auszuführen, wobei jedes der Dateneintragungsortelemente die semantische Kennung spezifiziert, die mit empfangenen Benutzereingabedaten für jenen zu besetzenden Dateneintragungsort assoziiert werden muss, und eine Datenmodellerweiterungsstruktur dem Datenmodellentwickler ermöglicht, Erweiterungsdaten (18) zu spezifizieren, die zumindest einen Prozess identifizieren, der durch den Datenprozessor (3) auszuführen ist, um ein durch den Benutzer spezifiziertes Objekt zu identifizieren.

43. Verfahren gemäß Anspruch 42, wobei die Datenmodellstruktur ein Dateneintragungselement für einen Datenmodellentwickler bereitstellt, um einen Farbdateneintragungsort zu spezifizieren.

44. Verfahren gemäß Anspruch 42 oder 43, wobei die Datenmodellstruktur eine Datenmodellbeschränkungsstruktur aufweist, die die für einzelne Dateneintragungselemente zur Verfügung stehende Benutzereingabe beschränkt.

45. Verfahren gemäß Anspruch 44, wobei die Datenmodellbeschränkungsstruktur zumindest eines der folgenden beschränkt:
ein Objekt oder eine Farbe, die durch eine Benutzereingabe zu spezifizieren ist, die eine Identität oder Position der Farbe oder des Objekts darstellt,
einen Dateneintragungsort auf lediglich gewisse Optionen,
einen Dateneintragungsort auf gewisse benannte Objekte, bei denen der Dateneintragungsort Daten mit einer Objekte darstellenden semantischen Kennung erfordert,
einen Dateneintragungsort auf gewisse Farben, bei denen der Dateneintragungsort Daten mit einer Farben darstellenden semantischen Kennung erfordert, und
gewisse Aktionen, bei denen der Dateneintragungsort Daten mit einer Aktionen darstellenden semantischen Kennung erfordert.

46. Verfahren gemäß einem der Ansprüche 42 bis 45, wobei die Datenmodellstruktur Anforderungen aufweist, die eine mit einer spezifischen semantischen Kennung für eine Operation assoziierte Benutzereingabe anfordern.

47. Verfahren gemäß Anspruch 46, wobei die Datenmodellstrukturanforderungen eine Benutzereingabe anfordern, die mit einer eine Position darstellenden semantischen Kennung assoziiert ist, wenn die Operation Bewegen oder Kopieren ist, eine Benutzereingabe anfordern, die mit einer einen Maßstab darstellenden semantischen Kennung assoziiert ist, wenn die Operation Größe Ändern ist, und eine Benutzereingabe anfordern, die mit einer eine Farbe darstellenden semantischen Kennung assoziiert ist, wenn die Operation Farbe Ändern ist.

48. Verfahren gemäß einem der Ansprüche 42 bis 47, wobei die Datenmodellstruktur eine XForms- Datenmodellstruktur ist und die Datenmodellerweiterungsstruktur als eine Erweiterung der XForms- Modellbindeeigenschaft bereitgestellt wird, um Prozess- oder Methodenaufrufe innerhalb der Berechnungseigenschaft der XForms- Modelleineheit zuzulassen.

49. Verfahren gemäß Anspruch 48 abhängig von Anspruch 44 oder 45, wobei die Datenmodellbeschränkungen durch eine XML- Schemastruktur bereitgestellt werden.

50. Verfahren gemäß Anspruch 49 oder 48 abhängig von Anspruch 46 oder 47, wobei die Anforderungen als Bindereferenzen des XForms- Datenmodells bereitgestellt werden.

51. Programmanweisungen zum Programmieren eines Prozessors, um ein Verfahren gemäß einem der Ansprüche 41 bis 50 auszuführen.

## Revendications

1. Appareil interpréteur d'entrée d'utilisateur comprenant :
un moyen de réception (4) pour recevoir des données d'entrée d'utilisateur spécifiant un objet et une opération à effecteur sur l'objet, **caractérisé en ce qu'**il comprend en outre :
un moyen d'association (8) pour associer des données d'entrée d'utilisateur reçues à des identifiants sémantiques en conformité avec des règles sémantiques (11, 13) ; et
un moyen de peuplement (9) pour peupler des emplacements d'entrée de données d'un modèle de données (15) en conformité avec des données d'entrée d'utilisateur identifiées sémantiquement associées aux identifiants sémantiques spécifiés pour ces emplacements d'entrée de données, dans lequel
le modèle de données (15) a des données d'extension de modèle de données (18) identifiant au moins un processus devant être effectué par un système de traitement de données (3) pour identifier un objet spécifié par l'utilisateur ; et
le moyen de peuplement (9) est conçu pour communiquer avec le système de traitement de données (3) afin d'ordonner au système de traitement de données (3) d'effectuer un processus identifié par les données d'extension (18) et de renvoyer des données d'identification d'objet qui identifient vis-à-vis du système de traitement de données (3) l'objet spécifié par l'utilisateur.

2. Appareil interpréteur d'entrée d'utilisateur selon la revendication 1, dans lequel le moyen de peuplement (9) est conçu pour communiquer avec le système de traitement de données (3) afin d'ordonner au système de traitement de données (3) d'effectuer un processus identifié par les données d'extension (18) et de renvoyer des données d'identification d'objet qui identifient vis-à-vis du système de traitement de données (3) l'instant où des emplacements d'entrée de données du modèle de données ont été peuplés en conformité avec des données d'entrée d'utilisateur spécifiant un objet et une opération devant être effectuée sur cet objet.

3. Appareil interpréteur d'entrée d'utilisateur selon la revendication 1 ou 2, dans lequel le moyen de réception (4) comprend une pluralité de différents moyens de réception de mode d'entrée de l'utilisateur (4).

4. Appareil interpréteur d'entrée d'utilisateur selon la revendication 3, dans lequel le moyen d'association (8) comprend un dispositif respectif d'association de significations sémantiques (81, 82) pour chaque mode d'entrée, et dans lequel un moyen d'intégration (19) est prévu pour intégrer des données d'entrée d'utilisateur identifiées sémantiquement en provenance des différents dispositifs d'association de significations sémantiques (81, 82).

5. Appareil interpréteur d'entrée d'utilisateur selon la revendication 4, dans lequel le moyen d'intégration (19) est conçu pour intégrer sémantiquement des données d'entrée d'utilisateur identifiées en provenance des différents dispositifs d'association de significations sémantiques (81, 82) lorsque les différents moyens de réception d'entrée de mode (4) reçoivent une entrée de l'utilisateur simultanément ou en moins d'un temps prédéterminé l'un par rapport à l'autre.

6. Appareil interpréteur d'entrée d'utilisateur selon la revendication 5, dans lequel le moyen d'intégration (19) est conçu pour considérer des données d'entrée d'utilisateur identifiées sémantiquement en provenance des différents dispositifs d'association de significations sémantiques (81, 82) afin de les intégrer sous forme de différents types de données sémantiques.

7. Appareil interpréteur d'entrée d'utilisateur selon l'une quelconque des revendications précédentes, conçu pour être utilisé avec un système de traitement de données (3) ayant une interface utilisateur graphique (4b) pour permettre à un utilisateur de fournir à un système de traitement de données (3) une commande d'utilisateur permettant de commander une opération devant être effectuée sur un objet affiché sur l'interface utilisateur graphique (4b) du système de traitement de données (3).

8. Appareil interpréteur d'entrée d'utilisateur selon l'une quelconque des revendications 3 à 6, conçu pour être utilisé avec un système de traitement de données (3) ayant une interface utilisateur graphique (4b) pour permettre à un utilisateur de fournir à un système de traitement de données (3) une commande d'utilisateur permettant de commander une opération devant être effectuée sur un objet affiché sur l'interface utilisateur graphique (4b) du système de traitement de données (3), dans lequel la pluralité de différents moyens de réception de mode d'entrée d'utilisateur (4) comprend un moyen de réception de mode d'entrée de données de position (4) et un moyen de réception de mode d'entrée de données de texte (4).

9. Appareil interpréteur d'entrée d'utilisateur selon la revendication 8, dans lequel le modèle de données (15) a un emplacement d'entrée de données de position d'objet associé à un moyen de spécification d'identifiant sémantique spécifiant un identifiant sémantique représentant une position et un emplacement d'entrée de données d'identité d'objet associé à un moyen de spécification d'identifiant sémantique spécifiant un identifiant sémantique représentant une identité d'objet.

10. Appareil interpréteur d'entrée d'utilisateur selon l'une quelconque des revendications 1 à 9, comprenant un moyen de contrainte de modèle de données pour contraindre l'entrée de l'utilisateur disponible pour la commande de l'utilisateur.

11. Appareil interpréteur d'entrée d'utilisateur selon l'une quelconque des revendications 3 à 9, comprenant un moyen de contrainte de modèle de données pour contraindre l'entrée de l'utilisateur disponible pour la commande de l'utilisateur.

12. Appareil interpréteur d'entrée d'utilisateur selon la revendication 9, comprenant un moyen de contrainte de modèle de données pour contraindre l'entrée de l'utilisateur disponible pour la commande de l'utilisateur, et dans lequel le moyen de contrainte de modèle de données est conçu pour permettre le peuplement soit de l'emplacement d'entrée de données de position d'objet, soit de l'emplacement de l'entrée de données d'identité de l'objet.

13. Appareil interpréteur d'entrée d'utilisateur, selon l'une quelconque des revendications 3 à 9, 11 ou 12, dans lequel le modèle de données permet également à un utilisateur de spécifier la couleur d'un objet.

14. Appareil interpréteur d'entrée d'utilisateur selon la revendication 13, dans lequel le modèle de données a un emplacement d'entrée de données de position de couleur associé à un moyen de spécification d'identifiant sémantique spécifiant un identifiant sémantique représentant une position et un emplacement d'entrée de données d'identité de couleur associé à un moyen de spécification d'identifiant sémantique spécifiant un identifiant sémantique représentant une identité de couleur.

15. Appareil interpréteur d'entrée d'utilisateur selon l'une quelconque des revendications 3 à 9, dans lequel le modèle de données permet également à un utilisateur de spécifier la couleur d'un objet, le modèle de données a un emplacement d'entrée de données de position de couleur associé à un moyen de spécification d'identifiant sémantique spécifiant un identifiant sémantique représentant une position et un emplacement d'entrée de données d'identité de couleur associé à un moyen de spécification d'identifiant sémantique spécifiant un identifiant sémantique représentant une identité de couleur et un moyen de fourniture de modèle de données comporte un moyen de contrainte de modèle de données pour contraindre l'entrée de l'utilisateur disponible pour la commande de l'utilisateur et le moyen de contrainte de modèle de données est conçu pour permettre le peuplement soit de l'emplacement d'entrée de données de position de couleur, soit de l'emplacement d'entrée de données d'identité de couleur.

16. Appareil interpréteur d'entrée d'utilisateur selon la revendication 10, 11, ou 12 ou 15, dans lequel le moyen de contrainte de modèle de données est conçu pour contraindre les objets à un ensemble d'objets spécifiés.

17. Appareil interpréteur d'entrée d'utilisateur selon la revendication 16, dans lequel le moyen de contrainte de modèle de données est conçu pour contraindre l'ensemble d'objets spécifiés afin qu'ils comprennent un rectangle, un triangle et un cercle.

18. Appareil interpréteur d'entrée d'utilisateur selon la revendication 10, 11, ou 12, 15, 16 ou 17, dans lequel le moyen de contrainte de modèle de données est conçu pour contraindre les opérations à un ensemble d'opérations spécifiées.

19. Appareil interpréteur d'entrée d'utilisateur selon la revendication 18, dans lequel le moyen de contrainte de modèle de données est conçu pour contraindre l'ensemble d'opérations spécifiées afin qu'elles comprennent les opérations : déplacement, copie, effacement, redimensionnement.

20. Appareil interpréteur d'entrée d'utilisateur selon la revendication 18 ou 19, lorsqu'elle dépend de la revendication 13, 14 ou 15, dans lequel le moyen de contrainte de modèle de données est conçu pour contraindre l'ensemble d'opérations spécifiées afin qu'elles comprennent les opérations : déplacement, copie, effacement, redimensionnement et changement de couleur.

21. Appareil interpréteur d'entrée d'utilisateur selon l'une quelconque des revendications précédentes, dans lequel un moyen de détermination d'exigence est prévu pour exiger une entrée d'utilisateur associée à un identifiant sémantique spécifique pour une opération.

22. Appareil interpréteur d'entrée d'utilisateur selon la revendication 21, lorsqu'elle dépend de la revendication 19 ou 20, dans lequel le moyen de détermination d'exigence est prévu pour exiger une entrée d'utilisateur associée à un identifiant sémantique représentant une position lorsque l'opération est "déplacement" ou "copie".

23. Appareil interpréteur d'entrée d'utilisateur selon la revendication 22 ou 21, lorsqu'elle dépend de la revendication 19 ou 20, dans lequel le moyen de détermination d'exigence est conçu pour exiger une entrée d'utilisateur associée à un identifiant sémantique représentant une échelle lorsque l'opération est "redimensionnement".

24. Appareil interpréteur d'entrée d'utilisateur selon la revendication 22 ou 23 ou la revendication 21, lorsqu'elle dépend de la revendication 19 ou 20, dans lequel le moyen de détermination d'exigence est conçu pour exiger une entrée d'utilisateur associée à un identifiant sémantique représentant une couleur lorsque l'opération est "changement de couleur".

25. Appareil interpréteur d'entrée d'utilisateur selon l'une quelconque des revendications précédentes, dans lequel le modèle de données est fourni sous la forme d'un modèle de données XForms et les données d'extension de modèle de données (18) sont fournies sous la forme d'une extension de la propriété de lien du modèle XForms pour permettre des appels à des processus ou à des méthodes au sein de la propriété de calcul de l'élément de modèle XForms.

26. Appareil interpréteur d'entrée d'utilisateur selon la revendication 25, lorsqu'elle dépend de l'une quelconque des revendications 10 à 12 ou 15 à 20, dans lequel le moyen de contrainte de modèle de données comprend un schéma XML.

27. Appareil interpréteur d'entrée d'utilisateur selon la revendication 25 ou 26, lorsqu'elle dépend de l'une quelconque des revendications 21 à 24, dans lequel le moyen de détermination d'exigence est prévu sous la forme de références de liaison du modèle de données XForms.

28. Appareil de traitement de données, comprenant :
un système de traitement de données (3) ; et
un appareil interpréteur d'entrée d'utilisateur selon l'une quelconque des revendications précédentes,
dans lequel le système de traitement de données (3) comprend un système de traitement de texte, un système de traitement d'image, un système de traitement de commande pour commander une opération d'une machine ou d'un outil commandé par ordinateur, ou un autre système de traitement de données (3) qui peut être mis en oeuvre par programmation d'un appareil informatique avec une application logicielle.

29. Appareil de traitement de données selon la revendication 28, comprenant en outre des dispositifs d'interface utilisateur comprenant au moins l'un d'un clavier (32), d'un microphone (33), d'une tablette graphique (34) et d'un dispositif de pointage (35).

30. Appareil fournisseur de modèle de données destiné à un interpréteur d'entrée d'utilisateur pour interpréter une entrée d'utilisateur afin de permettre à un utilisateur de fournir à un système de traitement de données (3) une commande d'utilisateur permettant de commander une opération devant être effectuée sur un objet présenté à l'utilisateur par une interface utilisateur du système de traitement de données (3), le fournisseur de modèle de données comprenant :
un moyen de fourniture de structure de modèle de données fournissant la structure d'un modèle de données qui fournit elle-même des éléments d'emplacements d'entrée de données pour permettre à un développeur de modèle de données de spécifier des emplacements d'entrée de données d'objets et d'opérations devant être peuplés en conformité avec des données d'entrée d'utilisateur pour permettre à une commande d'utilisateur d'être produite afin de faire en sorte que le système de traitement de données (3) exécute une opération sur un objet, chaque élément d'emplacement d'entrée de données spécifiant l'identifiant sémantique devant être associé à des données d'entrée d'utilisateur reçues pour cet emplacement d'entrée de données devant être peuplé et une structure d'extension du modèle de données permettant au développeur du modèle de données de spécifier des données d'extension (18) identifiant au moins un processus devant être exécuté par le système de traitement de données (3) afin d'identifier un objet spécifié par l'utilisateur.

31. Appareil fournisseur de modèle de données selon la revendication 30, dans lequel la structure du modèle de données fournit également un élément d'entrée de données permettant à un développeur du modèle de données de spécifier un emplacement d'entrée de données de couleurs.

32. Appareil fournisseur de modèle de données selon la revendication 30 ou 31, dans lequel la structure du modèle de données a une structure de contrainte de modèle de données configurée pour contraindre l'entrée d'utilisateur disponible pour des éléments d'entrée de données particuliers.

33. Appareil fournisseur de modèle de données selon la revendication 32, dans lequel la structure de contrainte du modèle de données est configurée pour contraindre un objet ou une couleur devant être spécifié par une entrée d'utilisateur représentant une identité ou une position de la couleur ou de l'objet.

34. Appareil fournisseur de modèle de données selon la revendication 32 ou 33, dans lequel la structure de contrainte du modèle de données est configurée pour contraindre un emplacement d'entrée de données à au moins l'un de :
seulement certaines options ;
certains objets nommés pour lesquels l'emplacement d'entrée de données exige des données ayant un identifiant sémantique représentant des objets ;
certaines couleurs pour lesquelles l'emplacement d'entrée de données exige des données ayant un identifiant sémantique représentant des couleurs ; et
certaines actions pour lesquelles l'emplacement d'entrée de données exige des données ayant un identifiant sémantique représentant des actions.

35. Appareil fournisseur de modèle de données selon l'une quelconque des revendications 30 à 34, dans lequel le moyen fournisseur de structure de modèle de données a une structure de détermination d'exigence conçue pour exiger une entrée d'utilisateur associée à un identifiant sémantique spécifique pour une opération.

36. Appareil fournisseur de modèle de données selon la revendication 35, dans lequel la structure de détermination d'exigence est conçue pour au moins l'une des opérations suivantes :
exiger une entrée d'utilisateur associée à un identifiant sémantique représentant une position lorsque l'opération est "déplacement" ou "copie" ;
exiger une entrée d'utilisateur associée à un identifiant sémantique représentant une échelle lorsque l'opération est "redimensionnement" ; et
exiger une entrée d'utilisateur associée à un identifiant sémantique représentant une couleur lorsque l'opération est "changement de couleur".

37. Appareil fournisseur de modèle de données selon l'une quelconque des revendications 30 à 36, dans lequel le moyen fournisseur de structure de modèle de données est conçu pour fournir une structure de modèle de données XForms et la structure d'extension de modèle de données est prévue en tant qu'extension de la propriété de lien du modèle XForms pour permettre des appels à des processus ou à des méthodes au sein de la propriété de calcul de l'élément de modèle XForms.

38. Appareil fournisseur de modèle de données selon la revendication 37, lorsqu'elle dépend de la revendication 32, 33 ou 34, dans lequel la structure de contrainte du modèle de données est dotée d'une structure de schéma XML.

39. Appareil fournisseur de modèle de données selon la revendication 38 ou 37, lorsqu'elle dépend de la revendication 35 ou 36, dans lequel la structure de détermination d'exigence est configurée pour fournir des exigences en tant que références de liaison du modèle de données XForms.

40. Appareil interpréteur d'entrée d'utilisateur pour fournir un interpréteur d'entrée d'utilisateur destiné à interpréter une entrée d'utilisateur pour permettre à un utilisateur de fournir à un système de traitement de données (3) une commande d'utilisateur permettant de commander une opération devant être effectuée sur un objet présenté à l'utilisateur par une interface utilisateur du système de traitement de données (3), l'appareil interpréteur d'entrée d'utilisateur comprenant :
une mémoire de règles sémantiques conçue pour stocker des règles sémantiques associant différentes données d'entrée d'utilisateur possibles à des identifiants sémantiques identifiant le type de données sémantiques de ces données d'entrée d'utilisateur possibles ;
un appareil fournisseur de modèle de données selon l'une quelconque des revendications 30 à 39 ;
un moyen d'association de significations sémantiques (8) pour associer des données d'entrée d'utilisateur reçues à des identifiants sémantiques en conformité avec des règles sémantiques stockées dans la mémoire de règles sémantiques afin de fournir des données d'entrée d'utilisateur identifiées sémantiquement ; et
un moyen de peuplement de modèle de données (9) pour peupler des emplacements d'entrée de données d'un modèle de données fourni par le fournisseur de modèle de données en conformité avec des données d'entrée d'utilisateur identifiées sémantiquement et associées aux identifiants sémantiques spécifiés pour ces emplacements d'entrée de données, le moyen de peuplement du modèle de données (9) étant conçu pour communiquer avec le système de traitement de données (3) afin d'ordonner au système de traitement de données (3) d'effectuer un processus identifié par les données d'extension (18) et de renvoyer des données d'identification de données qui identifient vis-à-vis du système de traitement de données (3) l'objet spécifié par l'utilisateur et le moyen de peuplement du modèle de données (9) qui est conçu pour compléter le peuplement du modèle de données afin de générer la commande d'utilisateur lors de la réception des données d'identification d'objets.

41. Procédé d'interprétation d'une entrée d'utilisateur, le procédé comprenant les étapes consistant à :
accéder à un modèle de données ayant des emplacements d'entrée de données d'objets et d'opérations ;
recevoir (S1) des données d'entrée d'utilisateur spécifiant un objet présenté à l'utilisateur par l'interface utilisateur et une opération devant être effectuée sur l'objet ; **caractérisé par le fait qu'**il consiste en outre à :
associer (S2, S3) des données d'entrée d'utilisateur reçues à des identifiants sémantiques en conformité avec des règles sémantiques ; et
peupler des emplacements d'entrée de données du modèle de données en conformité avec des données d'entrée d'utilisateur identifiées sémantiquement et associées aux identifiants sémantiques spécifiés pour ces emplacements d'entrée de données ;
dans lequel le modèle de données a des données d'extension de modèles de données (18) identifiant au moins un processus devant être effectué par un système de traitement de données (3) pour identifier un objet spécifié par l'utilisateur ; et dans lequel l'étape de peuplement comprend l'étape consistant à communiquer avec le système de traitement de données (3) afin d'ordonner au système de traitement de données (3) d'effectuer un processus identifié par les données d'extension (18) et de renvoyer des données d'identification d'objet qui identifient l'objet spécifié par l'utilisateur.

42. Procédé de fourniture d'un modèle de données destiné à un interpréteur d'entrée d'utilisateur pour interpréter une entrée d'utilisateur afin de permettre à un utilisateur de fournir à un système de traitement de données (3) une commande d'utilisateur permettant de commander une opération devant être effectuée sur un objet présenté à l'utilisateur par une interface utilisateur du système de traitement de données (3), le procédé consistant à :
fournir une structure de modèle de données fournissant des éléments d'emplacement d'entrée de données pour permettre à un développeur de modèles de données de spécifier des emplacements d'entrée de données d'objets et d'opérations devant être peuplés en conformité avec des données d'entrée d'utilisateur afin de permettre à une commande d'utilisateur d'être produite pour faire en sorte que le système de traitement de données (3) effectue une opération sur un objet, chaque élément d'emplacement d'entrée de données spécifiant l'identifiant sémantique devant être associé à des données d'entrée d'utilisateur reçues pour cet emplacement d'entrée de données devant être peuplé, et une structure d'extension du modèle de données permettant au développeur du modèle de données de spécifier des données d'extension (18) identifiant au moins un processus devant être effectué par le système de traitement de données (3) afin d'identifier un objet spécifié par l'utilisateur.

43. Procédé selon la revendication 42, dans lequel la structure du modèle de données fournit un élément d'entrée de données permettant à un développeur du modèle de données de spécifier un emplacement d'entrée de données de couleur.

44. Procédé selon la revendication 42 ou 43, dans lequel la structure du modèle de données a une structure de contrainte de modèle de données contraignant l'entrée d'utilisateur disponible pour des éléments d'entrée de données particuliers.

45. Procédé selon la revendication 44, dans lequel la structure de contrainte du modèle de données contraint au moins l'un :
d'un objet ou d'une couleur devant être spécifié par une entrée d'utilisateur représentant une identité ou une position de la couleur ou de l'objet ;
d'un emplacement d'entrée de données à seulement certaines options ;
d'un emplacement d'entrée de données à certains objets nommés pour lesquels l'emplacement d'entrée de données exige des données ayant un identifiant sémantique représentant des objets ;
d'un emplacement d'entrée de données à certaines couleurs pour lesquelles l'emplacement d'entrée de données exige des données ayant un identifiant sémantique représentant des couleurs ; et
certaines actions pour lesquelles l'emplacement d'entrée de données exige des données ayant un identifiant sémantique représentant des actions.

46. Procédé selon l'une quelconque des revendications 42 à 45, dans lequel la structure du modèle de données a des exigences exigeant une entrée d'utilisateur associée à un identifiant sémantique spécifique pour une opération.

47. Procédé selon la revendication 46, dans lequel les exigences de structure du modèle de données exigent une entrée d'utilisateur associée à un identifiant sémantique représentant une position lorsque l'opération est "déplacement" ou "copie", exigent une entrée d'utilisateur associée à un identifiant sémantique représentant une échelle lorsque l'opération est "redimensionnement" et exigent une entrée d'utilisateur associée à un identifiant sémantique représentant une couleur lorsque l'opération est "changement de couleur".

48. Procédé selon l'une quelconque des revendications 42 à 47, dans lequel la structure du modèle de données est une structure de modèle de données XForms et la structure d'extension du modèle de données est fournie en tant qu'extension de la propriété de lien du modèle XForms pour permettre des appels à des processus ou à des méthodes au sein de la propriété de calcul de l'élément de modèle XForms.

49. Procédé selon la revendication 48 lorsqu'elle dépend de la revendication 44 ou 45, dans lequel les contraintes du modèle de données sont fournies par une structure de schéma XML.

50. Procédé selon la revendication 49 ou 48 lorsqu'elle dépend de la revendication 46 ou 47, dans lequel les exigences sont fournies en tant que références de liaison du modèle de données XForms.

51. Instructions de programmes pour programmer un système de traitement afin qu'il mette en ouvre un procédé selon l'une quelconque des revendications 41 à 50.
